# EUROPÄISCHE PATENTANMELDUNG

(11) **EP 4 049 915 A1**
(43) Veröffentlichungstag der Anmeldung: **31.08.2022**
(21) Anmeldenummer: 21159216.7
(22) Anmeldetag: 25.02.2021
(51) Int. Cl.: B62B 5/00

(54) **FÖRDERVORRICHTUNG ZUM SCHIEBEN EINES TRANSPORTSTÜCKS**

(71) Anmelder: Service Gesellschaft Sozialstiftung Bamberg mbH, 96049 Bamberg (DE)
(72) Erfinder: Beck, Thomas, 96114 Hirschaid (DE); Schleier, Hermann Günther, Zeil am Main (DE); Schlund, Christoph Maximilian, Bamberg (DE)
(74) Vertreter: Geling, Andrea

(57) **Zusammenfassung**

Die Erfindung betrifft eine Fördervorrichtung (100) zum Schieben eines Transportstücks (200) entlang eines Bodens (300) mit zumindest einen Motor (2), um eine Bewegung der Fördervorrichtung entlang des Bodens zumindest zu unterstützen. Weiter weist die Fördervorrichtung einen Kopplungsmechanismus (3) zum Koppeln der Fördervorrichtung mit dem Transportstück auf. Die Fördervorrichtung ist so eingerichtet, dass ein Benutzer die Fördervorrichtung in eine Vorwärtsrichtung (V) vor sich her bewegen kann und der Motor eine Bewegung der Fördervorrichtung in Vorwärtsrichtung zumindest unterstützt. Die Fördervorrichtung ist außerdem so eingerichtet, dass der Kopplungsmechanismus die Fördervorrichtung mit dem Transportstück derart koppelt, dass bei der Bewegung der Fördervorrichtung das Transportstück mitbewegt wird und beim Koppeln ein Kontakt des Transportstück zum Boden aufrecht erhalten bleibt.

Weiter betrifft die Erfindung ein Set, ein Transportstück, ein System und ein Verfahren.

## Beschreibung

Es werden eine Fördervorrichtung zum Schieben eines Transportstücks, ein Set mit einer Fördervorrichtung, ein Transportstück zur Kopplung mit einer Fördervorrichtung, ein System umfassend eine Fördervorrichtung und ein Transportstück sowie ein Verfahren zum Betreiben einer Fördervorrichtung angegeben.

Transportstücke, wie beispielsweise Krankenhausmöbel, können einige 100 kg wiegen. Obwohl die Transportstücke mit Rollen bzw. Rädern versehen sein können, kann ein rein manuelles Schieben der Transportstücke schwierig sein.

Eine zu lösende Aufgabe besteht unter anderem darin, eine verbesserte Fördervorrichtung anzugeben. Bevorzugt ermöglicht die Fördervorrichtung ein einfaches Schieben und manövrieren von Transportstücken. Weitere zu lösende Aufgaben bestehen darin, ein Set mit einer solchen Fördervorrichtung, ein Transportstück zur Kopplung mit einer solchen Fördervorrichtung, ein System mit einer solchen Fördervorrichtung und ein Verfahren zum Betreiben einer solchen Fördervorrichtung anzugeben.

Diese Aufgaben werden unter anderem durch die Gegenstände der unabhängigen Patentansprüche gelöst. Vorteilhafte Ausgestaltungen und Weiterbildungen ergeben sich aus den abhängigen Ansprüchen und sind des Weiteren der nachfolgenden Beschreibung und den Figuren zu entnehmen.

Zunächst wird die Fördervorrichtung angegeben. Die Fördervorrichtung ist insbesondere zum Schieben eines Transportstücks entlang eines Bodens bzw. auf einem Boden eingerichtet. Bei dem Transportstück handelt es sich beispielsweise um ein Möbel, zum Beispiel ein Krankenhausmöbel, wie ein Container oder ein Bett oder ein Wäschewagen oder eine Essenswagen.

Gemäß zumindest eine Ausführungsform weist die Fördervorrichtung zumindest einen Motor auf, um eine Bewegung der Fördervorrichtung entlang des Bodens zumindest zu unterstützen.

Die Fördervorrichtung kann alleine durch den Motor entlang des Bodens bewegbar sein. Alternativ kann ein Teil der zur Bewegung der Fördervorrichtung notwendigen Kraft von einem Benutzer aufgebracht werden und der andere Teil durch den Motor. Beispielsweise werden bei einer Bewegung der Fördervorrichtung zumindest 50 % oder zumindest 75 % oder zumindest 90 % der zu Bewegung der Fördervorrichtung notwendigen Kraft durch den Motor aufgebracht. Bei dem Motor kann es sich um einen Elektromotor handeln. "Zumindest ein(e)" bedeute hier und im Folgenden genau ein(e) oder mehrere.

Gemäß zumindest eine Ausführungsform weist die Fördervorrichtung einen Kopplungsmechanismus zum Koppeln der Fördervorrichtung mit dem Transportstück auf. Insbesondere kann die Fördervorrichtung mit dem Transportstück mittels des Kopplungsmechanismus derart gekoppelt werden, dass bei einer Bewegung der Fördervorrichtung entlang des Bodens eine Kraft von der Fördervorrichtung auf das Transportstück übertragen wird, sodass das Transportstück mit der Fördervorrichtung mitbewegt wird. Beispielsweise ist die Kopplung dergestalt, dass jegliche Bewegung der Fördervorrichtung in Richtungen entlang bzw. parallel zum Boden zu einer Bewegung des Transportstück in dieselbe Richtung und/oder um dieselbe Distanz führt. Es kann sich bei der durch den Kopplungsmechanismus herstellbaren Kopplung um eine direkte und/oder mechanisch Kopplung handeln.

Gemäß zumindest eine Ausführungsform ist die Fördervorrichtung so eingerichtet, dass ein Benutzer die Fördervorrichtung in eine Vorwärtsrichtung vor sich her bewegen kann. Die Vorwärtsrichtung ist insbesondere eine Richtung parallel bzw. entlang des Bodens. Vor sich her bewegen bedeutet, dass der Benutzer bei der Bewegung der Fördervorrichtung in Vorwärtsrichtung sich hinter der Fördervorrichtung her bewegen kann, zum Beispiel hinterherlaufen kann. Dabei kann der Benutzer in mechanischen Kontakt zur Fördervorrichtung stehen. Zum Beispiel kann der Benutzer dabei die Fördervorrichtung anfassen oder greifen, insbesondere an einem hinteren Ende der Fördervorrichtung. Bevorzugt wird der Benutzer bei der Bewegung der Fördervorrichtung nicht von der Fördervorrichtung mitbewegt, sondern bewegt sich unabhängig von der Fördervorrichtung. Insbesondere kann die Fördervorrichtung dazu eingerichtet sein, sich vor dem Benutzer her zu bewegen, ohne dass der Benutzer von der Fördervorrichtung getragen wird oder ein Tragen des Benutzers notwendig ist.

Die Fördervorrichtung ist also insbesondere dazu eingerichtet, sich in eine Vorwärtsrichtung zu bewegen, insbesondere in Vorwärtsrichtung zu fahren. Die Fördervorrichtung ist bevorzugt auch dazu eingerichtet, sich in eine der Vorwärtsrichtung entgegengesetzte Rückwärtsrichtung zu bewegen, bevorzugt ebenfalls angetrieben oder unterstützt durch den Motor. Außerdem kann die Fördervorrichtung dazu eingerichtet sein, bei der Bewegung in Vorwärtsrichtung und/oder Rückwärtsrichtung Kurven zu fahren und/oder sich um eine Achse senkrecht zum Boden zu drehen.

Gemäß zumindest eine Ausführungsform ist die Fördervorrichtung so eingerichtet, dass der Motor eine Bewegung der Fördervorrichtung in Vorwärtsrichtung zumindest unterstützt. Beispielsweise können zumindest 50 % oder zumindest 75 % oder zumindest 90 % oder 100 % der zur Bewegung der Fördervorrichtung in Vorwärtsrichtung notwendigen Kraft durch den Motor aufgebracht werden. Zur Unterstützung der Bewegung der Fördervorrichtung in Vorwärtsrichtung kann eine manuell vom Benutzer in Vorwärtsrichtung ausgeübte Kraft auf die Fördervorrichtung notwendig sein. Beispielsweise kann die Fördervorrichtung so eingerichtet sein, dass nur beim Ausüben einer Kraft durch den Benutzer in Vorwärtsrichtung der Motor die Bewegung in Vorwärtsrichtung unterstützt.

Gemäß zumindest eine Ausführungsform ist die Fördervorrichtung so eingerichtet, dass der Kopplungsmechanismus die Fördervorrichtung mit dem Transportstück derart koppelt, dass bei einer Bewegung der Fördervorrichtung, insbesondere entlang des Bodens, das Transportstück mitbewegt, insbesondere geschoben wird.

Gemäß zumindest einer Ausführungsform bleibt beim Koppeln der Fördervorrichtung mit dem Transportstück über den Kopplungsmechanismus ein Kontakt des Transportstück zum Boden aufrechterhalten. Beispielsweise ist die Fördervorrichtung so eingerichtet, dass sie das Transportstück beim Koppeln nicht anhebt oder höchstens so weit anhebt, dass ein Kontakt des Transportstücks zum Boden aufrecht erhalten bleibt.

Die Kopplung durch den Kopplungsmechanismus ist zum Beispiel dergestalt, dass eine Bewegung der Fördervorrichtung in Vorwärtsrichtung auch zu einer Bewegung des Transportstück in Vorwärtsrichtung führt. Beispielsweise schiebt die Fördervorrichtung dabei das Transportstück in Vorwärtsrichtung. Insbesondere ist die Kopplung derart, dass beim Bewegen der Fördervorrichtung in Vorwärtsrichtung eine nach vorn gerichtete Fläche der Fördervorrichtung auf eine nach hinten gerichtete Fläche des Transportstücks drückt und dadurch das Transportstück in Vorwärtsrichtung schiebt.

Der Kopplungsmechanismus ist bevorzugt dazu eingerichtet, die Fördervorrichtung mit dem Transportstück derart zu koppeln, dass bei einer Bewegung der Fördervorrichtung in eine der Vorwärtsrichtung entgegengesetzte Rückwärtsrichtung das Transportstück in Rückwärtsrichtung mitbewegt wird. Zum Beispiel ist die Kopplung derart, dass beim Bewegen der Fördervorrichtung in Rückwärtsrichtung eine nach hinten gerichtete Fläche der Fördervorrichtung auf eine nach vorne gerichtet Fläche des Transportstücks drückt und dadurch das Transportstück in Rückwärtsrichtung schiebt. Durch eine Kopplung in Rückwärtsrichtung wird verhindert, dass beim Stehenbleiben der Fördervorrichtung das Transportstück aufgrund seiner Trägheit sich weiter in Vorwärtsrichtung bewegt.

Ebenso kann die Kopplung dergestalt sein, dass bei einer Bewegung der Fördervorrichtung nach links und rechts die Fördervorrichtung mit dem Transportstück nach links bzw. rechts mitbewegt wird. "Links" und "rechts" beziehen sich hier und im Folgenden auf eine Blickrichtung entlang Vorwärtsrichtung.

Anders ausgedrückt ist die Kopplung durch den Kopplungsmechanismus bevorzugt dergestalt, dass sie eine Relativbewegung der Fördervorrichtung zum Transportstück, zum Beispiel in Vorwärtsrichtung und/oder in Rückwärtsrichtung, blockiert.

Bei dem Transportstück handelt es sich insbesondere um ein Transportstück, das Auflageelemente, wie zum Beispiel Räder oder Rollen oder Walzen oder Ketten oder Kufen, aufweist, über die das Transportstück im Kontakt zum Boden steht. Bevorzugt bleibt zumindest eines der Auflageelemente, bevorzugt mehrere oder alle Auflageelemente, beim Koppeln mit der Fördervorrichtung in Kontakt zum Boden. Dies kann ein Schieben bzw. Bewegen des Transportstücks angetrieben durch die Fördervorrichtung in Vorwärtsrichtung erleichtern. Bevorzugt bleibt auch bei der Bewegung des Transportstücks, angetrieben durch die Fördervorrichtung, zumindest ein Auflageelement oder mehrere oder alle Auflageelemente des Transportstücks im Kontakt zum Boden erhalten.

In mindestens einer Ausführungsform weist die Fördervorrichtung zum Schieben eines Transportstücks entlang eines Bodens zumindest einen Motor auf, um eine Bewegung der Fördervorrichtung entlang des Bodens zumindest zu unterstützen. Weiter weist die Fördervorrichtung einen Kopplungsmechanismus zum Koppeln der Fördervorrichtung mit dem Transportstück auf. Die Fördervorrichtung ist so eingerichtet, dass ein Benutzer die Fördervorrichtung in eine Vorwärtsrichtung vor sich her bewegen kann und der Motor eine Bewegung der Fördervorrichtung in Vorwärtsrichtung zumindest unterstützt. Die Fördervorrichtung ist außerdem so eingerichtet, dass der Kopplungsmechanismus die Fördervorrichtung mit dem Transportstück derart koppelt, dass bei einer Bewegung der Fördervorrichtung das Transportstück mitbewegt wird und beim Koppeln ein Kontakt des Transportstück zum Boden aufrecht erhalten bleibt.

Eine hier beschriebene Fördervorrichtung kann eine Bewegung eines Transportstücks erleichtern. Dadurch dass der Benutzer die Fördervorrichtung vor sich her bewegen kann, kann ein Manövrieren der Fördervorrichtung gekoppelt mit dem Transportstück erleichtert werden. Die Unterstützung durch den Motor erleichtert das Bewegen der Fördervorrichtung, insbesondere bei angekoppeltem Transportstück. Dadurch dass bei der Kopplung und der anschließenden Bewegung der Kontakt des Transportstücks zum Boden aufrecht erhalten bleibt, können Auflageelemente des Transportstücks, wie z. B. Räder, zur Bewegung des Transportstücks mitgenutzt werden.

Die Fördervorrichtung kann in Vorwärtsrichtung und bevorzugt auch in eine der Vorwärtsrichtung entgegengesetzten Rückwärtsrichtung bewegt werden. Bei der Vorwärtsrichtung und der Rückwärtsrichtung handelt es sich um Richtungen parallel bzw. entlang des Bodens. Eine Bewegung in Vorwärtsrichtung und/oder Rückwärtsrichtung kann geradlinig oder kurvig sein. Die Fördervorrichtung umfasst insbesondere ein vorderes und ein hinteres Ende. Hier und im Folgenden ist ein vorderes Ende das am weitesten in Vorwärtsrichtung liegende Ende, ein hinteres Ende ist das am weitesten in Rückwärtsrichtung liegende Ende. Ist etwas vor oder weiter vorn angeordnet als etwas anderes, ist es hier und im Folgenden in Vorwärtsrichtung gesehen vor oder weiter vorn angeordnet als das andere, z. B. näher an einem vorderen Ende als das andere. Entsprechend ist, wenn etwas hinter oder weiter hinten angeordnet ist als etwas anderes, dieses hier und im Folgenden in Vorwärtsrichtung gesehen hinter oder weiter hinten angeordnet als das andere, z. B. näher an einem hinteren Ende als das andere. Eine nach vorn gerichtete Fläche ist hier und im Folgenden eine Fläche, auf die man bei einer Blickrichtung in Rückwärtsrichtung blickt. Eine nach hinten gerichtete Fläche ist hier und im Folgenden eine Fläche, auf die man bei einer Blickrichtung in Vorwärtsrichtung blickt.

Hier und im Folgenden gemachte Angaben bezüglich Orientierungen und Bewegungsrichtungen beziehen sich häufig darauf, dass die Fördervorrichtung auf einem Boden angeordnet ist und entlang des Bodens bewegbar ist. Insbesondere soll dabei die Fördervorrichtung derart auf dem Boden angeordnet sein, dass die Fördervorrichtung bestimmungsgemäß betrieben werden kann.

Gemäß zumindest einer Ausführungsform ist die Fördervorrichtung dazu eingerichtet, einen Betriebszustand der Fördervorrichtung zu signalisieren. Beispielsweise umfasst die Fördervorrichtung einen lichtemittierenden Bereich, wobei das von dem lichtemittierenden Bereich emittierte Licht den Betriebszustand der Fördervorrichtung anzeigt. Der Betriebszustand kann beispielsweise durch die Farbe des emittierten Lichtes oder die Form des lichtemittierenden Bereichs angezeigt werden. Zur Emission von Licht kann die Fördervorrichtung eine oder mehrere LEDs aufweisen, deren Licht insbesondere über den lichtemittierenden Bereich abgestrahlt wird. Der lichtemittierende Bereich ist beispielsweise an einem vorderen Ende der Fördervorrichtung angeordnet.

Gemäß zumindest einer Ausführungsform umfasst die Fördervorrichtung ein lichtemittierendes Element zur Abstrahlung von Licht in Vorwärtsrichtung. Das lichtemittierende Element ist insbesondere zur Beleuchtung des Bodens vor der Fördervorrichtung eingerichtet. Beispielsweise ist das lichtemittierende Element dazu eingerichtet, den Bereich des Bodens vor dem Transportstück zu beleuchten, wenn das Transportstück an die Fördervorrichtung gekoppelt ist. Zum Beispiel strahlt das lichtemittierende Element dann unter dem Transportstück durch. Zum Beispiel ist das lichtemittierende Element zur Beleuchtung des Bodens in einem Bereich, der zumindest 1 m oder zumindest 2 m oder zumindest 3 m vor der Fördervorrichtung liegt, eingerichtet. Das lichtemittierende Element kann eine oder mehrere LEDs aufweisen. Die Farbe des von dem lichtemittierenden Element abgestrahlten Lichts kann variierbar sein, beispielsweise zwischen Rot und Grün. Mit dem lichtemittierenden Element kann eine Annäherung der Fördervorrichtung, beispielsweise an eine Kreuzung, signalisierten werden und so ein Dritter gewarnt werden. Das lichtemittierende Element kann bei der Kopplung mit dem Transportstück automatisch aktiviert werden.

Gemäß zunächst eine Ausführungsform ist die Fördervorrichtung so eingerichtet, dass bei Ausübung einer in Vorwärtsrichtung gerichteten Kraft durch den Benutzer auf die Fördervorrichtung, beispielsweise durch Ausüben von Druck auf das hintere Ende der Fördervorrichtung bzw. durch Anschieben der Fördervorrichtung, diese in Vorwärtsrichtung geschoben werden kann. Beispielsweise wird beim Anschieben der Fördervorrichtung durch den Benutzer die Bewegung der Fördervorrichtung in Vorwärtsrichtung durch den Motor unterstützt. Die Unterstützung durch den Motor kann automatisch erfolgen. Zum Beispiel ist die Fördervorrichtung so eingerichtet, dass sie eine auf sie durch einen Benutzer ausgeübte Kraft in Vorwärtsrichtung erkennt und den Motor entsprechend ansteuert, um die Bewegung zu unterstützen.

Ebenso kann die Fördervorrichtung so eingerichtet sein, dass bei Ausübung einer in Rückwärtsrichtung gerichteten Zugkraft durch den Benutzer auf die Fördervorrichtung, beispielsweise durch Ziehen am hinteren Ende der Fördervorrichtung, diese in Rückwärtsrichtung gezogen werden kann, beispielsweise mit Unterstützung durch den Motor. Auch hier kann die Unterstützung durch den Motor automatisch erfolgen.

Für die Ansteuerung des zumindest einen Motors kann die Fördervorrichtung zumindest eine Steuereinheit aufweisen, um den Motor in Abhängigkeit von Steuersignalen anzusteuern.

Die Fördervorrichtung kann so eingerichtet sein, dass auch ohne eine Unterstützung durch den Motor die Fördervorrichtung durch den Benutzer in Vorwärtsrichtung geschoben und/oder in Rückwärtsrichtung gezogen werden kann. Die Möglichkeit des Schiebens oder Ziehens der Fördervorrichtung durch den Benutzer kann gegeben sein, wenn die Fördervorrichtung mit einem Transportstück gekoppelt ist und/oder wenn sie nicht gekoppelt ist.

Gemäß zumindest einer Ausführungsform ist die Fördervorrichtung so eingerichtet, dass eine maximale Geschwindigkeit der Fördervorrichtung bei Bewegung in Vorwärtsrichtung und/oder Rückwärtsrichtung abhängig davon eingestellt wird, ob die Fördervorrichtung an ein Transportstück gekoppelt ist oder nicht. Mit angekoppeltem Transportstück kann die maximale Geschwindigkeit geringer sein als ohne angekoppeltes Transportstück, z. B. höchstens 70 % oder höchstens 50 %. Die Fördervorrichtung ist insbesondere dazu eingerichtet, die maximale Geschwindigkeit automatisch einzustellen, z. B. durch entsprechende Ansteuerung des Motors und/oder einer Bremse der Fördervorrichtung.

Gemäß zumindest einer Ausführungsform weist die Fördervorrichtung einen Einschubabschnitt auf, der dazu eingerichtet ist, in Vorwärtsrichtung in oder unter das Transportstück gebracht, beispielsweise geschoben, zu werden. Zum Beispiel wird zum Koppeln der Fördervorrichtung mit dem Transportstück die Fördervorrichtung in Vorwärtsrichtung an das Transportstück geschoben und dabei der Einschubabschnitt in oder unter das Transportstück geschoben. Der Einschubabschnitt kann beispielsweise das vordere Ende der Fördervorrichtung bilden.

Das Transportstück kann einen Aufnahmebereich bzw. Einschubbereich zur Aufnahme des Einschubabschnitts aufweisen. Der Aufnahmebereich ist beispielsweise ein Bereich zwischen Auflageelementen des Transportstücks und/oder ein Bereich, in dem das Transportstück von dem Boden beanstandet ist, wenn das Transportstück bestimmungsgemäß auf dem Boden angeordnet ist, also mit den Auflageelementen voran auf dem Boden.

Der Einschubabschnitt der Fördervorrichtung weist zum Beispiel eine Oberseite und eine gegenüberliegen Unterseite auf. Im bestimmungsgemäßen Betrieb der Fördervorrichtung ist die Unterseite dem Boden zugewandt, die Oberseite dem Boden abgewandt. Ein Abstand zwischen der Oberseite und der Unterseite beträgt beispielsweise höchstens 50 cm oder höchstens 40 cm oder höchstens 30 cm oder höchstens 20 cm. Alternativ oder zusätzlich kann der Abstand zwischen der Oberseite und der Unterseite zum Beispiel mindestens 5 cm oder mindestens 10 cm sein. Die Oberseite und/oder die Unterseite können über einen Großteil ihrer jeweiligen Fläche, beispielsweise über zumindest 75 % ihrer jeweiligen Fläche, eben gebildet sein. Beispielsweise sind die Flächen der Oberseite und/oder der Unterseite jeweils zumindest 500 cm² oder zumindest 1000 cm² oder zumindest 10.000 cm² groß. Alternativ oder zusätzlich können die Flächen der Oberseite und/oder der Unterseite höchstens 20.000 cm² oder höchstens 10.000 cm² groß sein. Die Oberseite und die Unterseite können jeweils zusammenhängend ausgebildet sein. Beispielsweise verlaufen die Oberseite und die Unterseite parallel.

Beim bestimmungsgemäßen Betrieb der Fördervorrichtung beträgt ein Abstand der Oberseite des Einschubabschnitts zum Boden beispielsweise höchstens 50 cm oder höchstens 40 cm oder höchstens 30 cm oder höchstens 20 cm. Der Abstand der Oberseite zum Boden ist bevorzugt fest vorgegeben und nicht variabel. Insbesondere ist der Einschubabschnitt in vertikaler Richtung, senkrecht zur Vorwärtsrichtung bzw. senkrecht zum Boden nicht veränderbar.

Die Fördervorrichtung ist beispielsweise so eingerichtet, dass nach der Kopplung der Fördervorrichtung mit dem Transportstück die Oberseite des Einschubabschnitts über einen Großteil ihrer Fläche, beispielsweise über zumindest 50 % oder zumindest 75 % oder zumindest 95 % ihrer Fläche, von dem Transportstück beanstandet ist. Insbesondere erfolgt die Kopplung zwischen der Fördervorrichtung und dem Transportstück durch den Kopplungsmechanismus nicht oder nicht überwiegend über einen mechanischen Kontakt zwischen der Oberseite des Einschubabschnitts und dem Transportstück.

Gemäß zumindest einer Ausführungsform ist der Kopplungsmechanismus im Einschubabschnitt vorgesehen. Beispielsweise ist die Fördervorrichtung so eingerichtet, dass beim Koppeln mit dem Transportstück eine Kopplung zu einem Abschnitt des Transportstück erfolgt, der an den Aufnahmebereich des Transportstücks angrenzt.

Gemäß zumindest einer Ausführungsform ist die Fördervorrichtung so eingerichtet, dass eine Kopplung der Fördervorrichtung mit dem Transportstück durch den Kopplungsmechanismus ermöglicht bzw. freigegeben ist oder wird, wenn der Einschubabschnitt in oder unter das Transportstück geschoben ist. Beispielsweise wird eine Kopplung durch den Kopplungsmechanismus erst freigegeben, wenn der Einschubabschnitt in oder unter das Transportstück geschoben ist, insbesondere wenn der Einschubabschnitt eine vorgegebene Position in dem Einschubabschnitt einnimmt.

Gemäß zumindest einer Ausführungsform weist der Kopplungsmechanismus ein Kopplungselement auf. Das Kopplungselement kann an oder im Einschubabschnitt angeordnet sein.

Gemäß zumindest einer Ausführungsform ist das Kopplungselement zwischen einer Freigabeposition und einer Kopplungsposition bewegbar.

Gemäß zumindest einer Ausführungsform ist das Kopplungselement in eine Richtung senkrecht zur Vorwärtsrichtung zwischen der Kopplungsposition und der Freigabeposition bewegbar. Beispielsweise ist das Kopplungselement in einer vertikalen Richtung, senkrecht zum Boden, und/oder in einer horizontalen Richtung, parallel zum Boden, zwischen der Freigabeposition und der Kopplungsposition bewegbar. Die Kopplungsposition kann eine Position weiter weg vom Boden als die Freigabeposition sein oder auf gleicher Höhe über dem Boden wie die Freigabeposition sein.

Ein Abstand zwischen der Kopplungsposition und der Freigabeposition beträgt beispielsweise zumindest 0,5 cm oder zumindest 1 cm oder zumindest 2 cm. Alternativ oder zusätzlich kann der Abstand zwischen der Kopplungsposition und der Freigabeposition höchstens 10 cm oder höchstens 5 cm betragen. Beim Aktivieren des Kopplungsmechanismus wird das Kopplungselement beispielsweise von der Freigabeposition in die Kopplungsposition bewegt. Beim Deaktivieren des Kopplungsmechanismus wird das Kopplungselement beispielsweise von der Kopplungsposition in die Freigabeposition bewegt.

Gemäß zumindest einer Ausführungsform ist das Kopplungselement in der Kopplungsposition für ein Zusammenwirken mit einem Gegenkopplungselement des Transportstück eingerichtet, um eine Kraftübertragung von der Fördervorrichtung auf das Transportstück beim Bewegen der Fördervorrichtung, insbesondere in Vorwärtsrichtung und/oder Rückwärtsrichtung, zu bewirken. Das Zusammenwirken zwischen dem Kopplungselement und dem Gegenkopplungselement koppelt die Fördervorrichtung mit dem Transportstück. Das Zusammenwirken ist dabei zum Beispiel derart, dass bei einer Bewegung der Fördervorrichtung in Vorwärtsrichtung und/oder in Rückwärtsrichtung, zum Beispiel bei Bewegung in jede Richtung parallel zum Boden, das Kopplungselement und das Gegenkopplungselement aneinander gedrückt werden und so eine Kraftübertragung von der Fördervorrichtung auf das Transportstück erfolgt, die das Transportstück in eine gleichgerichtete Bewegung zwingt. Beispielsweise erfolgt eine Kraftübertragung, die das Transportstück in eine gemeinsame Bewegung mit der Fördervorrichtung zwingt, ausschließlich über die Kontaktfläche zwischen dem Kontaktelement und dem Gegenkontaktelement. Insbesondere kann dies für eine Bewegung in Rückwärtsrichtung gelten. Diese Kontaktfläche beträgt beispielsweise höchstens 20 cm² oder höchstens 10 cm².

Gemäß zumindest einer Ausführungsform ist das Kopplungselement für ein formschlüssiges und/oder kraftschlüssiges Zusammenwirken mit dem Gegenkopplungselement eingerichtet. Es kann das Kopplungselement für ein rein kraftschlüssiges Zusammenwirken mit dem Gegenkopplungselement eingerichtet sein. Bei einem rein kraftschlüssigen Zusammenwirken können das Kopplungselement und das Gegenkopplungselement beispielsweise ausschließlich durch Reibung zusammenwirken. Eine Kraftübertragung von der Fördervorrichtung auf das Transportstück erfolgt dann beispielsweise ausschließlich aufgrund von Reibung. Bei einem formschlüssigen Zusammenwirken können das Kopplungselement und das Gegenkopplungselement beispielsweise ineinandergreifen.

Gemäß zumindest einer Ausführungsform ist das Kopplungselement ein längliches Element, zum Beispiel ein Stift oder ein Dorn oder ein Kolben oder ein Bolzen. Das Kopplungselement kann zylindrisch sein. Eine Längsachse des Kopplungselements kann quer oder senkrecht zur Vorwärtsrichtung, beispielsweise quer oder senkrecht zum Boden verlaufen.

Gemäß zumindest einer Ausführungsform ist das Kopplungselement ein Haken. Beispielsweise weist der Haken eine konkav gekrümmte Außenfläche auf. In der Kopplungsposition kann die konkave gekrümmte Außenfläche in Rückwärtsrichtung bzw. nach hinten gerichtet sein. Beispielsweise ist freies Ende des Hakens dazu eingerichtet, in der Kopplungsposition an das Transportstück anzuschlagen. Zum Beispiel schlägt das freie Ende des Hakens bei der Kopplung und/oder bei Bewegung der Fördervorrichtung in Rückwärtsrichtung an eine nach vorne gerichtete Fläche des Transportstücks an.

Gemäß zumindest einer Ausführungsform ist das Kopplungselement ein Element, das für eine Auflage auf dem Gegenkopplungselement einen hohen Haft- und/oder Gleitreibungskoeffizienten aufweist. Zum Beispiel ist der Haft und/oder Gleitreibungskoeffizient bei einer Auflage auf dem Gegenkopplungselement zumindest 0,3 oder zumindest 0,4 oder zumindest 0,5 oder zumindest 0,6 oder zumindest 0,7. Beispielsweise handelt es sich bei dem Kopplungselement um ein gummiertes Element, das heißt eine Außenfläche für den Kontakt mit dem Gegenkopplungselement ist aus Gummi. Das Kopplungselement kann als Leiste oder Platte oder Schiene ausgeführt sein. Das Kopplungselement kann eine Einkerbung oder einen Vorsprung aufweisen. Die Einkerbung oder der Vorsprung können V-förmig sein.

Gemäß zumindest einer Ausführungsform ist das Kopplungselement zwischen der Kopplungsposition und der Freigabeposition linear bewegbar, beispielsweise ausschließlich linear bewegbar. Insbesondere wenn das Kopplungselement als Dorn oder Kolben oder Bolzen oder Stift ausgeführt ist, kann das Kopplungselement rein linear bewegbar sein, zum Beispiel entlang der Längsachse des Kopplungselements.

Gemäß zumindest einer Ausführungsform ist das Kopplungselement zwischen der Kopplungsposition und der Freigabeposition rotierbar. Das heißt, bei der Bewegung zwischen der Freigabeposition und der Kopplungsposition wird das Kopplungselement rotiert. Eine Rotationsachse für diese Rotation verläuft beispielsweise quer oder senkrecht zur Vorwärtsrichtung und/oder horizontal und/oder vertikal. Beispielsweise wird bei der Rotation von der Freigabeposition in die Kopplungsposition das Kopplungselement in vertikaler Richtung, insbesondere in Richtung weg vom Boden, und in Rückwärtsrichtung bewegt. Das Kopplungselement kann dazu eingerichtet sein, während der Rotation von der Freigabeposition in die Kopplungsposition an eine nach vorne gerichtete Fläche des Gegenkopplungselements anzustoßen und eventuell das Transportstück für ein Erreichen der Kopplungsposition ein Stück in Rückwärtsrichtung zu schieben. Beispielsweise wird bei der Bewegung des Kopplungselements von der Freigabeposition in die Kopplungsposition das Kopplungselement um zumindest 10° oder zumindest 30° oder zumindest 45° rotiert.

Gemäß zumindest einer Ausführungsform weist das Gegenkopplungselement eine Ausnehmung auf, in die das Kopplungselement in der Kopplungsposition eingeführt ist. Hier und im Folgenden werden unter einer Ausnehmung auch eine Aussparung oder eine Vertiefung oder eine Unterbrechung oder ein Loch verstanden. Die Ausnehmung ist in Vorwärtsrichtung und/oder in Rückwärtsrichtung, bevorzugt in alle Richtungen parallel zum Boden, durch Flächen des Transportstück begrenzt. Die Ausnehmung kann in Richtung hin zum Boden offen sein, sodass beim Bewegen des Kopplungselement in Richtung weg vom Boden das Kopplungselement in die Ausnehmung einführbar ist. Durch Anschlagen des Kopplungselements an die die Ausnehmung begrenzenden Flächen kann eine Kraftübertragung erfolgen. Das Gegenkopplungselement kann insbesondere ein Abschnitt des Transportstücks mit einer solchen Ausnehmung sein. Das Gegenkopplungselement kann eine Gleithülse oder Buchse umfassen.

Alternativ ist auch möglich, dass das Kopplungselement eine Ausnehmung aufweist und das Gegenkopplungselement ein Dorn oder Kolben oder Bolzen oder Haken zum Einführen in die Ausnehmung ist.

Eine weitere Möglichkeit bestehet darin, dass das Gegenkopplungselement als Leiste und/oder Schiene ausgebildet ist. Dies ist zum Beispiel der Fall, wenn das Kopplungselement auch als Leiste oder Platte oder Schiene ausgebildet ist. Zum Beispiel kann das Gegenkopplungselement durch eines der weiter unten beschriebenen Führungselemente, insbesondere Führungsschienen gebildet sein. Das Gegenkopplungselement kann eine dem Kopplungselement komplementäre Einkerbung oder Vorsprung aufweisen, zum Beispiel ebenfalls V-förmig. Beim Koppeln von Transportstück und Fördervorrichtung wird durch das Bewegen des Kopplungselements, zum Beispiel in horizontaler Richtung, dieses gegen das Gegenkopplungselement gepresst wodurch ein Kraftschluss entsteht. Ein Ineinandergreifen von Einkerbung und Vorsprung kann zusätzlich einen Formschluss bewirken. Um den Kraftschluss zu verstärken, kann das Kopplungselement und/oder das Gegenkopplungselement eine Außenfläche aus Gummi aufweisen.

Gemäß zumindest einer Ausführungsform ist der Kopplungsmechanismus dazu eingerichtet, die Fördervorrichtung und das Transportstück drehfest und/oder axialfest miteinander zu koppeln. "Drehfest" bedeutet hier, dass bei einer Drehung der Fördervorrichtung um eine Drehachse senkrecht zur Vorwärtsrichtung, insbesondere senkrecht zum Boden, das angekoppelte Transportstück mitgedreht wird, insbesondere um den gleichen Drehwinkel bezüglich der Drehachse. Axialfest bedeutet, dass bei einer Translation der Fördervorrichtung entlang bzw. parallel zum Boden, beispielsweise in Vorwärtsrichtung und/oder Rückwärtsrichtung, das Transportstück zu einer Translation in dieselbe Richtung, bevorzugt auch um dieselbe Strecke, gezwungen wird. Die drehfeste Kopplung ermöglicht insbesondere eine gemeinsame Kurvenbewegung bzw. -fahrt der Fördervorrichtung und des angekoppelten Transportstücks.

Der Kopplungsmechanismus kann zwei oder mehr Kopplungselemente aufweisen. Jedes der Kopplungselemente kann dabei wie das zuvor beschriebene Kopplungselement aufgebaut und eingerichtet sein. Entsprechend kann das Transportstück zwei oder mehr Gegenkopplungselemente aufweisen, die beispielsweise wie das oben beschriebene Gegenkopplungselement aufgebaut und eingerichtet sind. D. h., alle im Zusammenhang mit dem einen Kopplungselement und dem einen Gegenkopplungselement offenbarten Merkmale sind entsprechend für jedes weitere Kopplungselement und jedes weitere Gegenkopplungselement offenbart. Beispielsweise kann durch die Verwendung mehrerer Kopplungselemente und entsprechender Gegenkopplungselemente die drehfeste Kopplung realisiert werden.

Beispielsweise weist die Fördervorrichtung einen Kopplungsmechanismus mit zwei Kopplungselementen auf. Die Kopplungselemente können spiegelsymmetrisch zu einer Mittelebene der Fördervorrichtung angeordnet sein. Die Mittelebene ist dabei eine (virtuelle) Ebene parallel zur Vorwärtsrichtung und senkrecht zum Boden. Die gesamte Fördervorrichtung kann spiegelsymmetrisch oder im Wesentlichen spiegelsymmetrisch bezüglich dieser Mittelebene aufgebaut sein.

Gemäß zumindest einer Ausführungsform weist der Kopplungsmechanismus einen Magneten, insbesondere einen Hubmagneten, zur Bewegung des Kopplungselements zwischen der Kopplungsposition und der Freigabeposition auf. Durch Ein- und Ausschalten des Magneten, zum Beispiel durch Steuerung eines Stroms durch den Magneten, kann die Bewegung des Kopplungselements gesteuert werden.

Alternativ dazu kann die Bewegung des Kopplungselements auch durch einen Spindelantrieb realisiert sein. Dazu kann die Fördervorrichtung einen weiteren Motor, insbesondere einen Elektromotor, zum Bewegen des Kopplungselements über eine Spindelgetriebe aufweisen. Noch eine Möglichkeit besteht darin, dass die Fördervorrichtung einen Kompressor zum Bewegen des Kopplungselements aufweist. Insbesondere kann das Kopplungselement also pneumatisch bewegt werden.

Zur Bewegung des zumindest einen Kopplungselements, kann die Fördervorrichtung oder der Kopplungsmechanismus zumindest eine weitere Steuereinheit aufweisen. Die weitere Steuereinheit kann beispielsweise den Strom durch den Magneten steuern oder den Motor für den Spindelantrieb oder den Kompressor.

Gemäß zumindest einer Ausführungsform weist die Fördervorrichtung einen ersten Sensor zur Erfassung auf, ob die Fördervorrichtung bestimmungsgemäß zum Transportstück positioniert ist. Insbesondere ist der erste Sensor zur Erfassung eingerichtet, ob der Einschubabschnitt bestimmungsgemäß in oder unter das Transportstück geschoben ist. Die bestimmungsgemäße Positionierung ist insbesondere eine vorbestimmte Positionierung des Transportstücks bezüglich der Fördervorrichtung, zum Beispiel in der die Fördervorrichtung einen vorgegebenen Mindestabstand zum Transportstück und/oder eine vorgegebene Orientierung zum Transportstück hat. Die Fördervorrichtung kann zwei oder mehr solcher ersten Sensoren aufweisen. Beispielsweise sind die ersten Sensoren spiegelsymmetrisch bezüglich der Mittelebene angeordnet. Alle im Zusammenhang mit einem ersten Sensor offenbarten Merkmale sind auch für die anderen ersten Sensoren offenbart.

Gemäß zumindest einer Ausführungsform ist die Fördervorrichtung so eingerichtet, dass eine Kopplung der Fördervorrichtung mit den Transportstück durch den Kopplungsmechanismus erst ermöglicht wird, wenn der erste Sensor die bestimmungsgemäße Positionierung der Fördervorrichtung zum Transportstück erfasst. Beispielsweise ist der zumindest eine erste Sensor signaltechnisch mit dem Kopplungsmechanismus, insbesondere mit dessen Steuereinheit, gekoppelt. Beim Erfassen der bestimmungsgemäßen Positionierung der Fördervorrichtung zum Transportstück gibt der erste Sensor zum Beispiel ein elektrisches Freigabesignal aus und daraufhin wird der Kopplungsmechanismus in Abhängigkeit von dem Freigabesignal automatisch aktiviert oder für eine Aktivierung, zum Beispiel durch den Benutzer, freigegeben. Durch Aktivieren des Kopplungsmechanismus erfolgt dann insbesondere die Kopplung mit dem Transportstück.

Zum Beispiel ist die Fördervorrichtung so eingerichtet, dass erst wenn zwei oder mehr erste Sensoren ein Freigabesignal ausgeben, der Kopplungsmechanismus automatisch aktiviert wird bzw. eine Aktivierung freigegeben wird.

Gemäß zumindest einer Ausführungsform ist der erste Sensor ein Näherungssensor oder ein Kontaktsensor, der zur Erfassung eines Annäherns oder eines mechanischen Kontakts der Fördervorrichtung an einen bzw. zu einem Kontaktbereich des Transportstück eingerichtet ist. Ist der erste Sensor als Kontaktsensor ausgebildet, umfasst dieser beispielsweise eine Kontaktfläche mit zwei elektrisch leitfähigen und voneinander isolierten Kontaktelementen. Beim Kontakt der Kontaktfläche mit einem elektrisch leitenden Kontaktbereich des Transportstücks wird eine elektrische Verbindung zwischen den beiden Kontaktelementen hergestellt und dadurch das Freigabesignal erzeugt. Ist der erste Sensor als Näherungssensor ausgebildet, kann es sich bei dem ersten Sensor zum Beispiel um einen kapazitiven oder induktiven Sensor handeln. Für den ersten Sensor ist jeglicher Sensoren denkbar, der dazu eingerichtet ist, die Nähe oder den Kontakt des Transportstück oder eines bestimmten Bereichs des Transportstück zu erfassen oder zu detektieren.

Gemäß zumindest einer Ausführungsform weist die Fördervorrichtung einen zweiten Sensor zur Erfassung einer Übernahmeeinheit auf. Bei der Übernahmeeinheit kann es sich insbesondere um einen Bahnhof handeln, an den das Transportstück übergebar ist und mit dem das Transportstück dann eventuell weiter transportiert wird. Die Übernahmeeinheit kann beispielsweise als Transportband ausgebildet sein. Die Übernahmeeinheit kann ortsfest bzw. unbeweglich sein.

Der zweite Sensor ist beispielsweise an einem vorderen Ende der Fördervorrichtung angeordnet. Ein Detektionsbereich des zweiten Sensors, also ein Bereich der mit dem zweiten Sensor erfassbar ist, kann ein Bereich vor der Fördervorrichtung sein. Der Detektionsbereich erstreckt sich beispielsweise zumindest 50 cm oder zumindest 1 m vor der Fördervorrichtung.

Gemäß zumindest einer Ausführungsform ist die Fördervorrichtung so eingerichtet, dass eine Kopplung der Fördervorrichtung mit den Transportstück durch den Kopplungsmechanismus erst aufgelöst bzw. deaktiviert werden kann, wenn der zweite Sensor eine Übernahmeeinheit erfasst, insbesondere wenn der zweite Sensor eine bestimmungsgemäße Positionierung des Transportstücks bezüglich der Übernahmeeinheit erfasst. Zum Beispiel wird dann eine Deaktivierung des Kopplungsmechanismus freigegeben oder der Kopplungsmechanismus wird automatisch deaktiviert. Der zweite Sensor kann signaltechnisch mit einer Steuereinheit des Kopplungsmechanismus verbunden sein. Beispielsweise wird der zweite Sensor nur aktiviert, wenn die Fördervorrichtung an ein Transportstück gekoppelt ist.

Der zweite Sensor kann ein Abstandssensor sein, der eine Abstand zu einer Übernahmeeinheit, insbesondere zu einer Übernahmeeinheit vor der Fördervorrichtung, misst. Zum Beispiel ist die Fördervorrichtung so eingerichtet, dass der Kopplungsmechanismus erst deaktivierbar ist, wenn der zweite Sensor eine Übernahmeeinheit in einem vorgegebenen Abstand zu Fördervorrichtung erfasst. Der vorgegebene Abstand ist bevorzugt kleiner als der Abstand des vorderen Endes der Fördervorrichtung zum vorderen Ende des Transportstücks. Insbesondere ist der vorgegebene Abstand so gewählt, dass nur eine Übernahmeeinheit, die unter das Transportstück geführt ist, zu einer Auflösung des Kopplungsmechanismus führen kann.

Gemäß zumindest einer Ausführungsform ist der zweite Sensor ein Ultraschallsensor.

Gemäß zumindest einer Ausführungsform weist die Fördervorrichtung zumindest ein antreibbares Auflageelement auf. Das antreibbare Auflageelement ist insbesondere dazu eingerichtet, einen mechanischen Kontakt der Fördervorrichtung mit dem Boden herzustellen.

Gemäß zumindest einer Ausführungsform ist das antreibbare Auflageelement mit dem Motor gekoppelt und durch den Motor antreibbar, um die Fördervorrichtung entlang des Bodens zu bewegen. Beispielsweise ist das antreibbare Auflageelement über ein Getriebe mit dem Motor gekoppelt. Über das antreibbare Auflageelement wird eine Kraft von dem Motor auf den Boden übertragen, sodass die Fördervorrichtung, angetrieben durch den Motor, entlang des Bodens bewegt werden kann. Das antreibbare Auflageelement bewirkt also insbesondere die Traktion der Fördervorrichtung.

Gemäß zumindest einer Ausführungsform ist das antreibbare Auflageelement ein Rad oder eine Kette. Mit anderen Worten kann die Fördervorrichtung ein Radfahrzeug oder ein Kettenfahrzeug oder eine Mischung aus beiden sein. Das antreibbare Auflageelement kann bezüglich einer Drehung um eine Achse quer oder senkrecht zum Boden starr bzw. drehfest mit dem Rest der Fördervorrichtung verbunden sein. Alternativ kann das antreibbare Auflageelement um eine solche Achse bezüglich des Rests der Fördervorrichtung schwenkbar sein. Dies erleichtert eine Kurvenfahrt der Fördervorrichtung.

Bevorzugt umfasst die Fördervorrichtung zwei oder mehr antreibbare Auflageelemente. Alle im Zusammenhang mit dem zumindest einen antreibbaren Auflageelement offenbarten Merkmale sind entsprechend auch für alle weiteren antreibbaren Auflageelemente offenbart. Zwei antreibbare Auflageelemente können spiegelsymmetrisch bezüglich der Mittelebene angeordnet sein. Bevorzugt sind zumindest jeweils zwei antreibbare Auflageelemente einer gemeinsamen Achse der Fördervorrichtung zugeordnet. Die Achse kann eine virtuelle Achse sein. Zwei Auflageelemente sind hier und im Folgenden insbesondere dann einer gemeinsamen Achse zugeordnet, wenn Drehachsen der Auflageelement zusammenfallen. Der Abstand zwischen den einer gemeinsamen Achse zugeordneten Auflageelementen wird als Spurbreite bezeichnet. Die Spurbreite wird also insbesondere entlang einer Querrichtung, senkrecht zur Vorwärtsrichtung und/oder parallel zum Boden gemessen. Die Breite der Fördervorrichtung ist entsprechend ihre Ausdehnung entlang der Querrichtung.

Gemäß zumindest einer Ausführungsform umfasst die Fördervorrichtung ein linkes und ein rechtes antreibbares Auflageelement. Das linke und das rechte antreibbare Auflageelement sind insbesondere einer gemeinsamen Achse der Fördervorrichtung zugeordnet und/oder sind spiegelsymmetrisch bezüglich der Mittelebene angeordnet. Eine Spurbreite zwischen dem linken und dem rechten antreibbaren Auflageelement ist bevorzugt kleiner als die Breite der Fördervorrichtung.

Gemäß zumindest einer Ausführungsform sind das linke und das rechte antreibbare Auflageelement durch den zumindest einen Motor differenziell antreibbar. "Differenziell" bedeutet insbesondere, dass das linke und das rechte antreibbare Auflageelement durch den zumindest einen Motor unabhängig voneinander und/oder mit unterschiedlichen Drehzahlen und/oder unterschiedlichen Drehrichtungen betreibbar sind. Es kann dabei die Fördervorrichtung auch mehrere Motoren, beispielsweise für jedes antreibbare Auflageelement einen eigenen Motor aufweisen, um die antreibbaren Auflageelemente differenziell anzutreiben. Der oder die Motoren für den Antrieb der antreibbaren Auflageelemente können insbesondere Radnarbenmotoren sein.

Durch ein differenzielles Antreiben des linken und rechten antreibbare Auflageelements kann eine Kurvenbewegung / -fahrt der Fördervorrichtung nach links und rechts erleichtert werden, insbesondere wenn die Fördervorrichtung mit dem Transportstück gekoppelt ist.

Gemäß zumindest einer Ausführungsform ist zumindest ein antreibbares Auflageelement, bevorzugt mehrere oder alle antreibbaren Auflageelemente, an oder im Einschubabschnitt der Fördervorrichtung angeordnet. Ein oder mehrere oder alle antreibbaren Auflageelemente sind nach der Kopplung mit dem Transportstück bevorzugt unter dem Transportstück angeordnet, sodass beim Blick von oben das Transportstück die antreibbaren Auflageelemente überdeckt. Bevorzugt ist eine Spurbreite der antreibbaren Auflageelemente geringer als eine Spurbreite von Auflageelementen des Transportstücks.

Gemäß zumindest einer Ausführungsform weist die Fördervorrichtung ein Benutzerkontaktelement zum Berühren oder Greifen der Fördervorrichtung durch den Benutzer und/oder zum Anschieben und/oder Ziehen der Fördervorrichtung durch den Benutzer auf. Bei dem Benutzerkontaktelement kann es sich um einen Griff handeln. Das Benutzerkontaktelement ist insbesondere zum Berühren oder Greifen der Fördervorrichtung mit der Hand des Benutzers eingerichtet. Das Benutzerkontaktelement ist beispielsweise an einem hinteren Ende der Fördervorrichtung angeordnet oder bildet das hintere Ende der Fördervorrichtung. Insbesondere ist das Benutzerkontaktelement hinter dem Einschubschnitt angeordnet. Nach dem Koppeln mit dem Transportstück ist das Benutzerkontaktelement bevorzugt hinter dem Transportstück angeordnet. Das Benutzerkontaktelement ist zum Beispiel auf einer anderen Höhe bezüglich des Bodens angeordnet als die Oberseite des Einschubabschnitts, zum Beispiel weiter weg vom Boden als die Oberseite. Zum Beispiel ist das Benutzerkontaktelement auf einer Höhe über dem Boden angeordnet, die zwischen einschließlich 100 cm und 150 cm beträgt.

Gemäß zumindest einer Ausführungsform weist das Benutzerkontaktelement zumindest einen Kraftsensor zum Erfassen einer auf den Kraftsensoren durch den Benutzer ausgeübten Kraft auf. Unter einem Kraftsensor wird hier und im Folgenden beispielsweise ein Drucksensor oder einen Berührungssensor, zum Beispiel ein kapazitiver Sensor, verstanden. Ein Kraftsensor kann auch einen Hebel oder Druckknopf aufweisen, der bei Ausübung von Kraft geschwenkt oder eingedrückt wird.

Das Benutzerkontaktelement kann auch zwei oder mehr Kraftsensoren aufweisen. Alle im Zusammenhang mit dem zumindest einen Kraftsensor offenbarten Merkmale sind entsprechend auch für die anderen Kraftsensoren des Benutzerkontaktelements offenbart.

Gemäß zumindest einer Ausführungsform ist die Fördervorrichtung so eingerichtet, dass ein Antrieb zumindest eines antreibbaren Auflageelements durch den Motor in Abhängigkeit von der mit dem Kraftsensor oder den Kraftsensoren erfassten Kraft erfolgt. Der Kraftsensor gibt beispielsweise ein Steuersignal aus, das repräsentativ dafür ist ob und/oder wie viel Kraft auf den Kraftsensor ausgeübt wird. Die Ansteuerung zumindest eines antreibbaren Auflageelements durch den Motor kann dann in Abhängigkeit von dem Steuersignal erfolgen. Beispielsweise kann in Abhängigkeit von dem Steuersignal gesteuert werden, ob und/oder wie stark und/oder in welche Richtung das antreibbare Auflageelement angetrieben wird. Zum Beispiel wird eine Kraft und/oder Drehzahl und/oder Drehrichtung, mit der das antreibbare Auflageelement durch den Motor angetrieben wird, in Abhängigkeit von dem Steuersignal gewählt.

Gemäß zumindest einer Ausführungsform weist Fördervorrichtung zwei oder mehr Benutzerkontaktelemente zum Berühren oder Greifen mit je einer Hand auf. Alle im Zusammenhang mit dem zumindest einen Benutzerkontaktelement offenbarten Merkmale sind auch für die anderen Benutzerkontaktelemente offenbart.

Gemäß zumindest einer Ausführungsform weisen die Benutzerkontaktelemente jeweils zumindest einen Kraftsensoren zum Erfassen einer auf ihn durch den Benutzer ausgeübten Kraft auf.

Gemäß zumindest einer Ausführungsform ist die Fördervorrichtung so eingerichtet, dass ein differenzieller Antrieb des linken und rechten antreibbaren Auflageelements durch den zumindest einen Motor in Abhängigkeit von den mit den Kraftsensoren in den beiden Benutzerkontaktelementen erfassten Kräfte erfolgt. Beispielsweise erfolgt ein Antrieb des linken antreibbaren Auflageelements durch den zumindest einen Motor in Abhängigkeit von der mit dem Kraftsensor in einem linken Benutzerkontaktelement erfassten Kraft und ein Antrieb des rechten antreibbaren Auflageelements durch den zumindest einen Motor in Abhängigkeit von der mit dem Kraftsensor in einem rechten Benutzerkontaktelement erfassten Kraft. Das linke und rechte Benutzerkontaktelement können bezüglich der Mittelebene spiegelsymmetrisch angeordnet sein. Durch diese Art der Ansteuerung des linken und rechten antreibbaren Auflageelements kann der Benutzer durch Ausübung unterschiedlicher Kräfte auf unterschiedliche Benutzerkontaktelemente die Fördervorrichtung zu einer links oder Rechtskurve bewegen.

Gemäß zumindest einer Ausführungsform weist die Fördervorrichtung zumindest ein weiteres Auflageelement zum Kontakt mit dem Boden auf. Die Fördervorrichtung kann zwei oder mehr weitere Auflageelemente aufweisen. Beispielsweise sind zwei oder je zwei weitere Auflageelemente einer gemeinsamen Achse zugeordnet. Alle im Zusammenhang mit dem zumindest einen weiteren Auflageelement offenbarten Merkmale sind auch für jedes andere weitere Auflageelement offenbart. Das zumindest eine weitere Auflageelement ist bevorzugt nicht durch den Motor antreibbar. Beispielsweise ist das zumindest eine weitere Auflageelement von dem Motor entkoppelt.

Gemäß zumindest einer Ausführungsform ist das weitere Auflageelement ein Rad zum Rollen entlang des Bodens.

Gemäß zumindest einer Ausführungsform ist das weitere Auflageelement schwenkbar um eine Achse senkrecht zum Boden gelagert. Ist das weitere Auflageelement als Rad ausgebildet, so ist eine Drehachse des Rads bevorzugt parallel zum Boden gerichtet. Ein schwenkbares weiteres Auflageelement erleichtert die Kurvenfahrt mit der Fördervorrichtung.

Gemäß zumindest einer Ausführungsform umfasst die Fördervorrichtung ein linkes und ein rechtes weiteres Auflageelement. Diese sind bevorzugt einer gemeinsamen Achse zugeordnet und/oder spiegelsymmetrisch bezüglich der Mittelebene angeordnet. Die Spurbreite zwischen dem linken und rechten weiteren Auflageelement ist bevorzugt kleiner als die Breite der Fördervorrichtung.

Gemäß zumindest einer Ausführungsform ist das weiteres Auflageelement, bevorzugt mehrere oder alle weiteren Auflageelemente, an oder im Einschubabschnitt der Fördervorrichtung angeordnet. Ein oder mehrere oder alle weiteren Auflageelemente sind nach der Kopplung zum Transportstück bevorzugt unter dem Transportstück angeordnet, sodass beim Blick von oben das Transportstück die weiteren Auflageelemente überdeckt. Bevorzugt ist eine Spurbreite der weiteren Auflageelemente geringer als eine Spurbreite von Auflageelementen des Transportstücks.

Gemäß zumindest einer Ausführungsform ist das weitere Auflageelement hinter dem antreibbaren Auflageelement angeordnet. Zum Beispiel sind alle weiteren Auflageelemente hinter den antreibbaren Auflageelementen angeordnet.

Gemäß zumindest einer Ausführungsform ist das antreibbare Auflageelement größer als das weitere Auflageelement. Insbesondere ist ein Durchmesser des als Rad ausgebildeten antreibbaren Auflageelements größer als, beispielsweise zumindest doppelt so groß wie, ein Durchmesser des als Rad ausgebildeten weiteren Auflageelements.

Gemäß zumindest einer Ausführungsform ist der Motor in dem Einschubabschnitt angeordnet und/oder bei bestimmungsgemäßer Positionierung der Fördervorrichtung unter dem Transportstück angeordnet. Beim Blick von oben kann das Transportstück den Motor überdecken.

Gemäß zumindest einer Ausführungsform ist der Motor ein Elektromotor.

Gemäß zumindest einer Ausführungsform ist zumindest eine Batterie zur Energieversorgung des Motors in der Fördervorrichtung, insbesondere im Einschubabschnitt, angeordnet oder anordenbar. Bei bestimmungsgemäßer Positionierung der Fördervorrichtung kann die Batterie unter dem Transportstück angeordnet sein. Unter einer Batterie wird insbesondere ein Akkumulator verstanden. Die Batterie kann eine 12V Batterie sein. Mehrerer solcher Batterien können in der Fördervorrichtung angeordnet sein oder anordenbar sein.

Gemäß zumindest einer Ausführungsform sind die Batterie und/oder der Motor in Vorwärtsrichtung gesehen auf Höhe des antreibbaren Auflageelements angeordnet und/oder überlappen mit diesem in Vorwärtsrichtung. Insbesondere können die Batterie und/oder der Motor in Vorwärtsrichtung auf Höhe der Achse des linken und rechten antreibbaren Auflageelements angeordnet sein und/oder mit dieser überlappen.

Gemäß zumindest einer Ausführungsform weist die Fördervorrichtung zumindest ein Einschubführungselement an dem Einschubabschnitt auf. Das Einschubführungselement dient insbesondere zur Führung der Fördervorrichtung entlang einer oder mehrerer Führungselemente des Transportstück beim Einbringen des Einschubabschnitts in oder unter das Transportstück.

Das Einschubführungselement kann ein Rad oder eine Rolle oder eine Walze sein. Insbesondere kann eine Drehachse des Einschubführungselements, um die das Einschubführungselement drehbar gelagert ist, quer oder senkrecht zur Vorwärtsrichtung, insbesondere quer oder senkrecht zum Boden verlaufen.

Das Führungselement des Transportstück kann eine Schiene sein. Beim Einbringen des Einschubabschnitts in oder unter das Transportstück kann das Einschubführungselement entlang des Führungselements gleiten oder rollen, also insbesondere in Kontakt zu dem Führungselement kommen.

Gemäß zumindest einer Ausführungsform weist die Fördervorrichtung links und rechts an dem Einschubabschnitt jeweils mehrere Einschubführungselemente auf. Die Einschubführungselemente sind insbesondere seitlich an dem Einschubabschnitt angeordnet. Alle im Zusammenhang mit dem einen Einschubführungselement offenbarten Merkmale sind auch für alle anderen Einschubführungselemente offenbart. Mehrere oder alle Einschubführungselemente können auf gleicher Höhe über dem Boden angeordnet sein.

Gemäß zumindest einer Ausführungsform sind die Einschubführungselemente auf der linken und rechten Seite jeweils entlang der Vorwärtsrichtung hintereinander angeordnet. Beispielsweise sind an der linken und rechten Seite des Einschubabschnitts jeweils zumindest zwei oder zumindest vier Einschubführungselemente angeordnet. Die Einschubführungselemente können an der linken und rechten Seite äquidistant angeordnet sein.

Jedem Einschubführungselement an der linken Seite des Einschubabschnitts ist bevorzugt ein Einschubführungselement an der rechten Seite des Einschubabschnitts derart zugeordnet, dass die beiden Einschubführungselemente in Querrichtung einander gegenüberliegen. Diese einander zugeordneten Einschubführungselement bilden ein Paar.

Gemäß zumindest einer Ausführungsform ist der Abstand von einem Einschubführungselement an der linken Seite zu dem nächsten Einschubführungselement an der rechten Seite umso kleiner umso weiter vorne die Einschubführungselemente in der Fördervorrichtung angeordnet sind. Insbesondere nimmt also der Abstand zwischen den Einschubführungselementen eines Paares ab, je weiter vorne dieses Paar angeordnet ist.

Unabhängig davon ob Einschubführungselemente vorhanden sind oder nicht, kann sich der Einschubabschnitt in Richtung vom hinteren Ende zum vorderen Ende der Fördervorrichtung verjüngen. Insbesondere kann die Breite des Einschubabschnitts, gemessen senkrecht zur Vorwärtsrichtung und insbesondere parallel zum Boden, vom hinteren Ende zum vorderen Ende abnehmen.

Ein sich in Vorwärtsrichtung verjüngender Einschubabschnitt bzw. eine wie oben beschriebene Anordnung von Einschubführungselementen kann eine Positionierung der Fördervorrichtung bezüglich des Transportstück erleichtern.

Gemäß zumindest einer Ausführungsform weist die Fördervorrichtung beziehungsweise der Einschubabschnitt zumindest ein Seitenelement auf. Das Seitenelement kann links oder rechts am Einschubabschnitt angeordnet. Bevorzugt umfasst die Fördervorrichtung zwei Seitenelemente, wovon eines an der linken Seite des Einschubabschnitts und das andere an der rechten Seite des Einschubabschnitts angeordnet ist. Alle im Zusammenhang mit einem Seitenelement offenbarten Merkmale sind im Folgenden auch für das andere Seitenelement offenbart. Das Seitenelement kann sich in Vorwärtsrichtung verjüngen und so die verjüngende Form des Einschubabschnitts realisieren. Insbesondere kann sich das Seitenelement über einen Großteil der Länge des Einschubabschnitts erstrecken, wobei die Länge parallel zur Vorwärtsrichtung gemessen wird.

Gemäß zumindest einer Ausführungsform trägt das Seitenelement ein oder mehrere Einschubführungselemente. Das Seitenelement kann insbesondere ein Lager für ein oder mehrere Einschubführungselemente bilden. Ferner kann das Seitenelement den ersten Sensor tragen oder aufweisen. Das Seitenelement kann insbesondere zwei in vertikaler Richtung einander gegenüberliegende Elemente aufweisen, zwischen denen die Einschubführungselemente und/oder der erste Sensor angeordnet sind.

Gemäß zumindest einer Ausführungsform ist das Seitenelement drehbar gelagert. Insbesondere ist das Seitenelement bezüglich eines Hauptkörpers der Fördervorrichtung und/oder des Einschubabschnitts drehbar gelagert. Beispielsweise ist das Seitenelement um eine senkrecht zur Vorwärtsrichtung und/oder quer oder senkrecht zum Boden verlaufende Drehachse drehbar gelagert. Beispielsweise ist das Seitenelement um einen Winkel von zumindest 5° und/oder von höchstens 30° zwischen einer ersten Position und einer zweiten Position drehbar. In der ersten Position verjüngt sich beispielsweise der Einschubabschnitt in Vorwärtsrichtung. In der zweiten Position verjüngt sich beispielsweise der Einschubabschnitt in Vorwärtsrichtung weniger stark als in der ersten Position.

Gemäß zumindest einer Ausführungsform umfasst das Seitenelement das oder ein Kopplungselement. Beispielsweise wird bei einer Drehung des Seitenelements von der ersten in die zweite Position das Kopplungselement von der Freigabeposition in die Kopplungsposition bewegt. Das Kopplungselement kann insbesondere eine gummierte Leiste oder Schiene oder Platte an einer Außenseite des zweiten Elements sein. Beispielsweise ist das Kopplungselement in Vorwärtsrichtung zwischen zwei Einschubführungselementen angeordnet.

Gemäß zumindest einer Ausführungsform weist die Fördervorrichtung ein Authentifizierungssystem zur Authentifizierung eines Benutzers der Fördervorrichtung auf. Das Authentifizierungssystem ist insbesondere dazu eingerichtet, festzustellen, ob ein Benutzer zu einer Benutzung der Fördervorrichtung berechtigt ist.

Gemäß zumindest einer Ausführungsform ist die Fördervorrichtung so eingerichtet, dass der Motor die Bewegung der Fördervorrichtung in Abhängigkeit von der Authentifizierung unterstützt. Beispielsweise gibt das Authentifizierungssystem ein Authentifizierungssignal aus, sobald ein Benutzer sich erfolgreich authentifiziert. Der Motor wird dann beispielsweise nur in Abhängigkeit von diesem Authentifizierungssignal gestartet oder gesteuert. Beispielsweise wird zur Bewegung der Fördervorrichtung eine Unterstützung durch den Motor nur bereitgestellt, wenn sich der Benutzer erfolgreich authentifiziert.

Gemäß zumindest einer Ausführungsform weist die Fördervorrichtung ein Ortungselement zur Erfassung des Ortes, an dem sich die Fördervorrichtung befindet, auf. Beispielsweise ist das Ortungselement ein Transponder, insbesondere einen RFID-Chip, der zum Signalaustausch, insbesondere zum drahtlosen Signalaustausch, mit ortsfesten Ortungselementen eingerichtet ist. Die ortsfesten Ortungselemente sind zum Beispiel Lesegeräte an bestimmten Orten in einem Gebäude, wie einem Krankenhaus. Zum Beispiel erfolgt der Signalaustausch sobald die Fördervorrichtung sich einem ortsfesten Ortungselement auf einen vorbestimmten Abstand nähert. Zum Beispiel kann in Abhängigkeit von dem Signalaustausch bzw. dem ausgetauschten Signal die Position der Fördervorrichtung erfasst werden

Gemäß zumindest einer Ausführungsform weist die Fördervorrichtung zumindest ein Anschlagelement zum Anschlagen an ein Gegenanschlagelement des Transportstücks auf, um eine Bewegung der Fördervorrichtung in Vorwärtsrichtung relativ zum Transportstück vor dem Koppeln zu begrenzen. Insbesondere dient der Anschlag des Anschlagelements an das Gegenanschlagelement zur bestimmungsgemäßen Positionierung der Fördervorrichtung bezüglich des Transportstücks. Das Anschlagelement kann seitlich an dem Einschubabschnitt angeordnet sein. Beispielsweise handelt es sich bei dem Anschlagelement um einen Vorsprung seitlich an dem Einschubabschnitt. Dieser kann weiter in Querrichtung vorragen als alle anderen Komponenten des Einschubabschnitts und/oder der Fördervorrichtung. Beispielsweise ist das Anschlagelement im Bereich des hinteren Endes des Einschubabschnitts angeordnet.

Das Seitenelement kann das Anschlagelement aufweisen oder es kann das Anschlagelement an das Seitenelement gekoppelt sein. Das Seitenelement kann so ausgeführt sein, dass beim Anschlagen des Anschlagelements an das Gegenanschlagelement das Seitenelement von der ersten Position in die zweite Position gedreht wird. Insbesondere wird beim Anschlagen eine Hebelkraft auf das Seitenelement übertragen, die zu einer Drehung des Seitenelements von der ersten Position in die zweite Position führt. Diese automatische Drehung kann insbesondere Teil der Aktivierung des Kopplungsmechanismus sein. Der Kopplungsmechanismus kann ein Arretierungssystem aufweisen, um das Seitenelement in der zweiten Position zu fixieren und/oder eine Kraft auf das Seitenelement auszuüben. Das Arretierungssystem wird beispielsweise in Abhängigkeit des Freigabesignals des zumindest einen ersten Sensors aktiviert.

Die Fördervorrichtung kann zwei Anschlagelemente aufweisen. Alle im Zusammenhang mit dem einen Anschlagelement offenbarten Merkmale können entsprechend auch für das andere Anschlagelement offenbart sein. Beispielsweise sind die Anschlagelemente links und rechts an dem Einschubabschnitt, insbesondere im Bereich des hinteren Endes des Einschubabschnitts, angeordnet und/oder erstrecken sich in Querrichtung nach außen. Die Anschlagelemente können jeweils durch ein Seitenelement gebildet sein.

Beim Bewegen der Fördervorrichtung, insbesondere in Vorwärtsrichtung, kann das Anschlagelement an das Gegenanschlagelement gedrückt werden. Bei der Bewegung der Fördervorrichtung in Vorwärtsrichtung kann zumindest ein Teil oder die gesamte auf das Transportstück übertragene und in Vorwärtsrichtung wirkenden Kraft über die Kontaktfläche zwischen dem Anschlagelement und dem Gegenanschlagelement übertragen werden.

Als nächstes wird das Set angegeben.

Gemäß zumindest einer Ausführungsform weist das Set eine hier beschriebene Fördervorrichtung auf.

Gemäß zumindest einer Ausführungsform weist das Set ein Gegenkopplungselement zum Anbringen, zum Beispiel Anschrauben, an ein Transportstück, insbesondere an eine Unterseite des Transportstücks, auf. Das Gegenkopplungselement ist insbesondere so eingerichtet, dass ein Kopplungselement des Kopplungsmechanismus der Fördervorrichtung in Eingriff mit dem Gegenkopplungselement gebracht werden kann, um die Fördervorrichtung mit dem Transportstück zu koppeln. Das Gegenkopplungselement kann insbesondere das oben beschriebene Gegenkopplungselement sein.

Das Set kann eine Platte zum Anbringen, insbesondere Anschrauben, an das Transportstück, zum Beispiel an eine Unterseite des Transportstücks, aufweisen. Die Platte kann das Gegenkopplungselement aufweisen.

Gemäß zumindest einer Ausführungsform weist das Set außerdem ein Führungselement zum Anbringen, insbesondere Anschrauben, an das Transportstück, zum Beispiel an eine Unterseite des Transportstücks, auf. Das Führungselement ist insbesondere dazu eingerichtet, mit Einschubführungselement der Fördervorrichtung zusammen zu wirken, um beim Einbringen des Einschubabschnitts in oder unter das Transportstück die Fördervorrichtung zu führen. Das Führungselement kann das oben beschriebene Führungselement sein. Insbesondere kann das Führungselement eine Führungsschiene sein. Die Platte kann das Führungselement aufweisen.

Als nächstes wird das Transportstück angegeben. Bei dem Transportstück handelt es sich beispielsweise um ein Möbel, insbesondere ein Krankenhausmöbel. Das Transportstück kann zum Beispiel ein Container oder ein Bett sein.

Gemäß zumindest einer Ausführungsform ist das Transportstück zur Kopplung mit einer hier beschriebenen Fördervorrichtung eingerichtet. Das Transportstück kann Teile des Sets, zum Beispiel das Gegenkopplungselement und/oder das Führungselement aufweisen. Alle im Zusammenhang mit der Fördervorrichtung und/oder dem Set offenbarten Merkmale für ein Transportstück sind auch für das nachfolgend beschriebene Transportstück offenbart und umgekehrt.

Gemäß zumindest einer Ausführungsform weist das Transportstück zumindest ein Auflageelement zum Kontakt mit dem Boden auf. Bei dem Auflageelement kann es sich um ein Rad handeln, dass zum Rollen entlang des Bodens eingerichtet ist. Das Auflageelement kann schwenkbar um eine Achse senkrecht zum Boden gelagert sein, um eine Bewegung des Transportstücks in verschiedene Richtungen entlang des Bodens zu ermöglichen.

Das Transportstück kann zwei oder mehr Auflageelemente aufweisen. Alle im Zusammenhang mit dem zumindest einen Auflageelement offenbarten Merkmale sind auch für die anderen Auflageelemente offenbart. Beispielsweise weist das Transportstück genau vier oder mehr Auflageelemente auf. Alle vier Auflageelement können jeweils als Rad ausgebildet sein. Von diesen können wiederum alle schwenkbar um eine Achse senkrecht zum Boden sein oder es sind nur zwei schwenkbar oder keines.

Das Transportstück kann Bremsen aufweisen, um ein Rollen der Auflageelemente zu blockieren. Zum Beispiel ist jeder Rolle eine Bremse zugeordnet.

Gemäß zumindest einer Ausführungsform weist das Transportstück ein Gegenkopplungselement auf, das dazu eingerichtet ist, in Eingriff mit einem Kopplungselement der Fördervorrichtung gebracht zu werden.

Gemäß zumindest einer Ausführungsform weist das Transportstück einen Einschubbereich zum Einbringen des Einschubabschnitts auf. Der Einschubbereich kann insbesondere ein Bereich zwischen den Auflageelementen des Transportstück sein. Der Einschubbereich ist beispielsweise ein Bereich, in dem das Transportstück vom Boden beanstandet ist, sodass der Einschubabschnitt der Fördervorrichtung beim Einbringen in den Einschubbereich unter das Transportstück gebracht wird.

Gemäß zumindest einer Ausführungsform weist das Transportstück zumindest ein Führungselement auf, um das Einbringen des Einschubabschnitts in oder unter das Transportstück zu führen. Das Führungselement ist beispielsweise eine Schiene. Beispielsweise erstreckt sich eine Haupterstreckungsebene des Führungselements senkrecht zum Boden.

Das Transportstück kann zwei oder mehr Führungselemente aufweisen. Alle im Zusammenhang mit einem Führungselement offenbarten Merkmale sind auch für die anderen Führungselemente offenbart. Beispielsweise verlaufen die Führungselemente zumindest abschnittsweise parallel zueinander und/oder parallel zur Vorwärtsrichtung. Im Bereich des hinteren Endes des Transportstück können die Führungselemente auseinanderlaufen. Beispielsweise nimmt der Abstand der Führungselemente im Bereich des hinteren Endes in Vorwärtsrichtung hin ab und bleibt dann konstant. Dies kann das Einführen des Einschubabschnitts zwischen den Führungselementen erleichtern. Das oder die Führungselemente können in Querrichtung zwischen den Auflageelementen angeordnet sein.

Gemäß zumindest einer Ausführungsform ist das Transportstück ein Container zur Aufbewahrung von Gegenständen oder ein Bett.

Gemäß zumindest einer Ausführungsform wiegt das Transportstück zumindest 50 kg oder zumindest 100 kg. Alternativ oder zusätzlich kann das Transportstück höchstens 1000 kg oder höchstens 500 kg wiegen.

Als nächstes wird das System angegeben. Das System umfasst eine hier beschriebene Fördervorrichtung und ein hier beschriebenes Transportstück. Alle im Zusammenhang mit der Fördervorrichtung und dem Transportstück offenbarten Merkmale sind daher auch für das System offenbart und umgekehrt.

Gemäß zumindest einer Ausführungsform sind in dem System die Fördervorrichtung und das Transportstück über den Kopplungsmechanismus gekoppelt. Insbesondere ist der Einschubabschnitt in oder unter das Transportstück geschoben. Eine Spurbreite der Auflageelemente der Fördervorrichtung ist bevorzugt kleiner als eine Spurbreite der Auflageelemente des Transportstücks.

Gemäß zumindest einer Ausführungsform ist ein Radstand zwischen den weiteren Auflageelementen und den antreibbaren Auflageelementen der Fördervorrichtung, d.h. der Abstand in Vorwärtsrichtung zwischen den Achsen der weiteren Auflageelemente und den antreibbaren Auflageelementen, kleiner als ein Radstand der Auflageelemente des Transportstücks. Zum Beispiel ist der Radstand des Transportstücks zumindest doppelt so groß wie der Radstand der Fördervorrichtung

Als nächstes wird das Verfahren zum Betreiben einer Fördervorrichtung angegeben. Bei der Fördervorrichtung handelt es sich insbesondere um eine wie oben beschrieben Fördervorrichtung. Alle im Zusammenhang mit der Fördervorrichtung offenbarten Merkmale sind daher auch für das Verfahren offenbart und umgekehrt.

Gemäß zumindest einer Ausführungsform umfasst das Verfahren einen Schritt, in dem die Fördervorrichtung in Vorwärtsrichtung bewegt wird, um die Fördervorrichtung bezüglich eines Transportstück zu positionieren. Bei dem Transportstück kann es sich um ein wie oben beschriebenes Transportstück handeln. Alle im Zusammenhang mit dem Transportstück offenbarten Merkmale sind daher auch für das Verfahren offenbart und umgekehrt.

Beim Positionieren der Fördervorrichtung bezüglich des Transportstück wird insbesondere der Einschubabschnitt in den Einschubbereich gebracht bzw. geschoben. Beispielsweise wird die Fördervorrichtung soweit in Vorwärtsrichtung geschoben, bis das zumindest eine Anschlagelement der Fördervorrichtung an das zumindest eine Gegenanschlagelement des Transportstück anschlägt. Anschließend erfasst zum Beispiel der zumindest eine erste Sensor, dass die Fördervorrichtung bestimmungsgemäß bezüglich des Transportstück positioniert ist und generiert ein entsprechendes Freigabesignal.

Gemäß zumindest einer Ausführungsform umfasst das Verfahren einen Schritt, in dem die Fördervorrichtung mit dem Transportstück mittels des Kopplungsmechanismus gekoppelt wird. Dabei bleibt bevorzugt ein Kontakt des Transportstück zum Boden aufrechterhalten. Insbesondere bleiben ein oder mehrere oder alle Auflageelemente des Transportstücks in Kontakt zum Boden.

Zum Beispiel wird in Abhängigkeit von dem Freigabesignal der Kopplungsmechanismus aktiviert, wodurch das Kopplungselement automatisch in Richtung weg vom Boden in die Kopplungsposition bewegt wird und dabei in Eingriff mit dem Gegenkopplungselement des Transportstück kommt.

Gemäß zumindest einer Ausführungsform umfasst das Verfahren einen Schritt, in dem die Fördervorrichtung in Vorwärtsrichtung bewegt wird, wobei das Transportstück in Vorwärtsrichtung mitbewegt wird. Die Bewegung der Fördervorrichtung in Vorwärtsrichtung wird bevorzugt durch den zumindest einen Motor zumindest unterstützt.

Nachfolgend werden eine hier beschriebene Fördervorrichtung, ein hier beschriebenes Set, ein hier beschriebenes Transportstück, ein hier beschriebenes System und ein hier beschriebenes Verfahren unter Bezugnahme auf Zeichnungen anhand von Ausführungsbeispielen näher erläutert. Gleiche Bezugszeichen geben dabei gleiche, gleichartige oder gleichwirkende Elemente in den einzelnen Figuren an. Es sind dabei jedoch nicht zwangsläufig maßstäbliche Bezüge dargestellt, vielmehr können einzelne Elemente zum besseren Verständnis übertrieben groß dargestellt sein.

Es zeigen:
Figuren 1 bis 6 verschiedene Ansichten eines Ausführungsbeispiels der Fördervorrichtung,
Figuren 7 und 8 Teile eines Ausführungsbeispiel eines Sets,
Figuren 9 und 10 verschiedene Positionen in einem Ausführungsbeispiel des Verfahrens,
Figuren 11 bis 15 verschiedene Ansichten eines Ausführungsbeispiel des Systems,
Figuren 16 und 17 ein Ausführungsbeispiel des Kopplungsmechanismus in verschiedenen Positionen,
Figuren 18 bis 21 ein weiteres Ausführungsbeispiel des Kopplungsmechanismus in verschiedenen Positionen,
Figur 22 ein weiteres Ausführungsbeispiel der Fördervorrichtung in einer Ansicht von oben,
Figuren 23 bis 25 ein weiteres Ausführungsbeispiel des Kopplungsmechanismus,
Figur 26 ein weiteres Ausführungsbeispiel der Fördervorrichtung in einer Ansicht von oben,
Figur 27 ein Ausführungsbeispiel des Transportstücks in einer Ansicht von unten,
Figuren 28 und 29 ein weiteres Ausführungsbeispiel des Systems in verschiedenen Ansichten,
Figuren 30 und 31 ein weiteres Ausführungsbeispiel der Fördervorrichtung in verschiedenen Ansichten,
Figuren 32 bis 34 verschiedene Ansichten eines Ausführungsbeispiels der Fördervorrichtung und des Systems während des jeweiligen Betriebs.

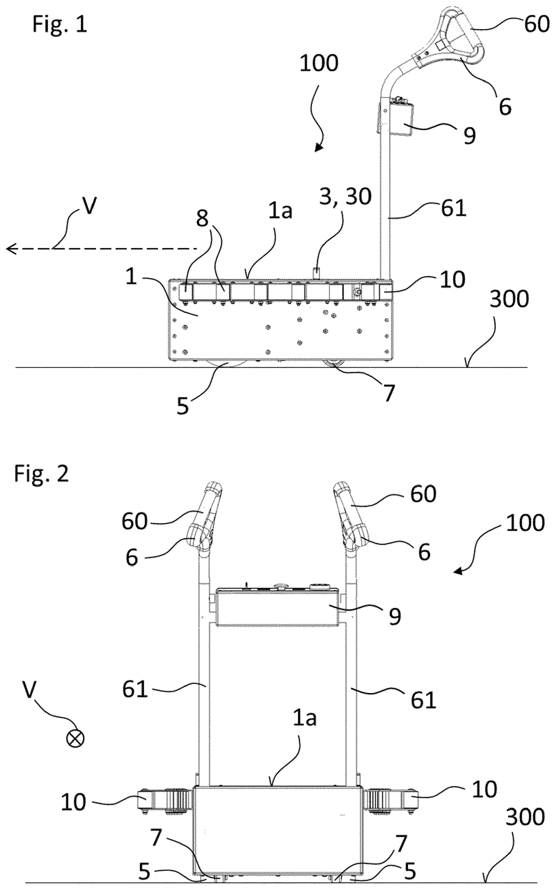

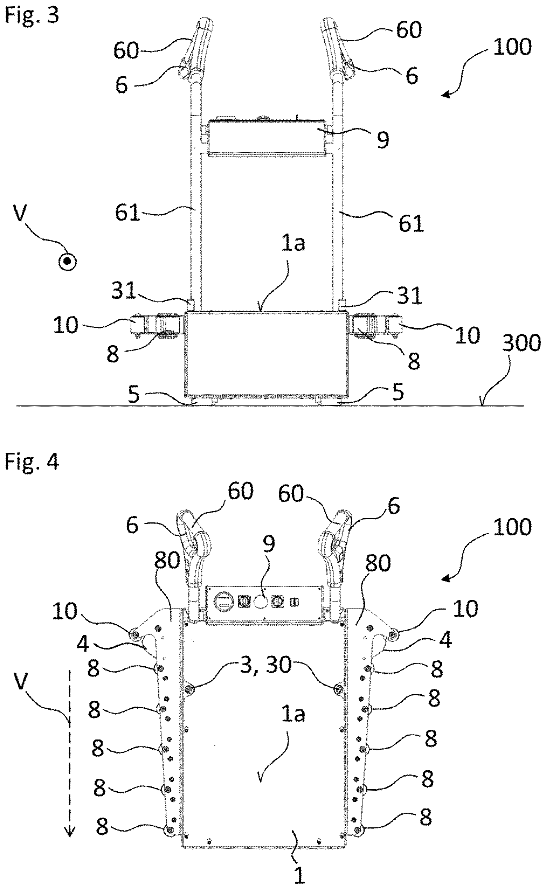

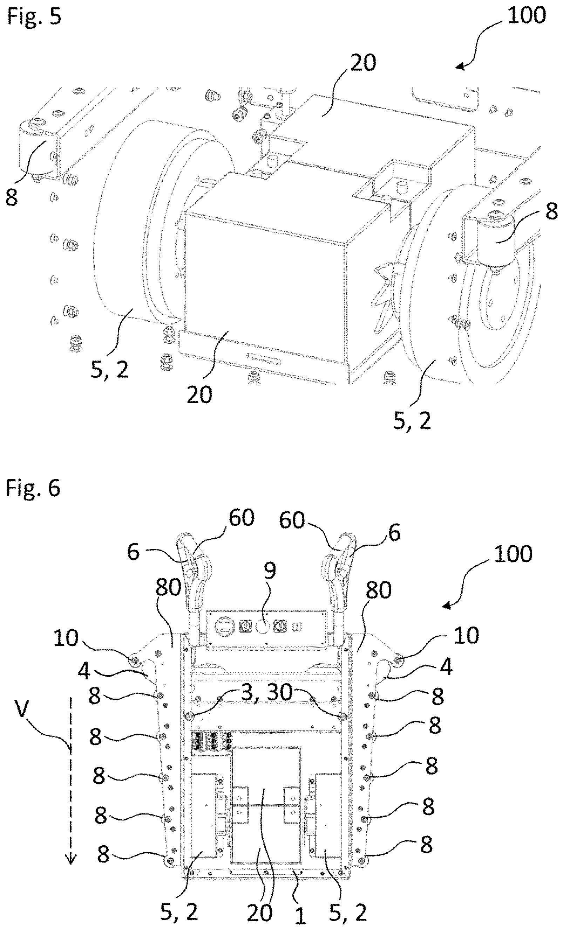

Figur 1 zeigt ein Ausführungsbeispiel der Fördervorrichtung 100 in einer Seitenansicht. Figur 2 zeigt die Fördervorrichtung 100 von hinten, Figur 3 zeigt die Fördervorrichtung 100 von vorne und Figur 4 zeigt die Fördervorrichtung 100 in Draufsicht von oben. Figuren 5 und 6 zeigen das Innere dieser Fördervorrichtung 100.

Die Fördervorrichtung 100 steht auf einem Boden 300. Die Fördervorrichtung 100 umfasst einen Einschubabschnitt 1 mit einer Oberseite la, die im Wesentlichen eben ist und dem Boden 300 abgewandt ist. Eine der Oberseite 1a gegenüberliegende Unterseite des Einschubabschnitts 1 ist vom Boden 300 beanstandet. Aus der Unterseite des Einschubabschnitts 1 ragen Auflageelemente 5, 7 in Form von Rädern 5, 7 hervor, die den Kontakt der Fördervorrichtung 100 zum Boden 300 herstellen.

Die Fördervorrichtung 100 umfasst Benutzerkontaktelemente 6 in Form von Griffen 6. Diese sind über Verbindungsstangen 61 an dem Einschubabschnitt 1 befestigt. Die Griffe 60 sind durch die Verbindungstangen 61 auf eine Höhe geführt, die zum Greifen durch einen Benutzer vorteilhaft ist.

Die Fördervorrichtung 100 umfasst einen Kopplungsmechanismus 3 mit einem Kopplungselement 30. Das Kopplungselement 30 hat die Form eines Bolzens bzw. Kolbens, der in Richtung senkrecht zur Vorwärtsrichtung V und senkrecht zum Boden 300 zwischen einer Freigabeposition und einer Kopplungsposition bewegbar ist. In der Figur 1 ist das Kopplungselement 30 zur Illustration in der Kopplungsposition.

Die Fördervorrichtung 100 umfasst vorliegend vier Räder 5, 7. Zwei der Räder sind antreibbare Räder 5, die mit je einem Motor 2 gekoppelt sind und über die Motoren 2 differenziell antreibbar (drehbar) sind (s. auch Figur 5). Die Motoren 2 sind vorliegend in die antreibbaren Räder 5 eingebaute Radnabenmotoren. Durch die Motoren 2 kann eine Bewegung der Fördervorrichtung 100 in Vorwärtsrichtung V, bevorzugt aber auch in die entgegengesetzte Rückwärtsrichtung, unterstützt werden. Die Motoren 2 sind Elektromotoren die durch eine Batterie 20 bzw. zwei Batterien 20 mit Strom versorgt werden. Die Batterien 20 sind in dem Einschubabschnitt 1 auf Höhe der Drehachsen der antreibbaren Räder 5 angeordnet.

Zwei weitere Räder 7 sind nicht mit den Motoren 2 gekoppelt. Diese weiteren Räder 7 können schwenkbar um eine Achse senkrecht zum Boden 300 gelagert sein, um eine Kurvenführung der Fördervorrichtung 100 zu erleichtern. Die antreibbaren Räder 5 sind beispielsweise nicht schwenkbar um eine Achse senkrecht zum Boden 300 gelagert, also bezüglich einer Drehung um diese Achse starr mit dem Rest der Fördervorrichtung 100 verbunden. Die antreibbaren Räder 5 sind in Vorwärtsrichtung V vor den weiteren Rädern 7 angeordnet. Außerdem sind die antreibbaren Räder 5 größer (größerer Durchmesser) als die weiteren Räder 7.

Die Griffe 6 umfassen jeweils zumindest einen Kraftsensor 60. Die Kraftsensoren 60 sind zur Erfassung einer auf sie wirkenden Kraft durch den Benutzer eingerichtet. Insbesondere ist die Fördervorrichtung 100 so eingerichtet, dass eine Kraft, zum Beispiel Druck, auf den linken Griff 6 dazu führt, dass der Kraftsensor 60 ein Steuersignal generiert und in Abhängigkeit von diesem Steuersignal das linke antreibbare Rad 5 über den zugeordneten Motor 2 angetrieben wird. Entsprechend führt eine Kraft, zum Beispiel Druck, auf den rechten Griff 6 zu einem Steuersignal des zugehörigen Kraftsensors 60 und in Abhängigkeit von diesem Steuersignal wird das rechte antreibbare Rad 5 über den zugeordneten Motor 2 angetrieben. Dadurch kann die Fördervorrichtung 100 zu Rechts- oder Linkskurven bewegt werden.

Die Fördervorrichtung 100 umfasst außerdem eine Mittelkonsole 9, die die beiden Verbindungsstangen 61 miteinander verbindet. In der Mittelkonsole 9 kann ein Display zur Anzeige eines Betriebszustands der Fördervorrichtung 100 angeordnet sein. In der Mittelkonsole 9 kann außerdem ein Not-Aus-Knopf zum Stoppen der Fördervorrichtung 100 angeordnet sein. Außerdem kann die Mittelkonsole 9 ein Authentifizierungssystem zur Authentifizierung des Benutzers aufweisen. Beispielsweise ist Fördervorrichtung 100 so eingerichtet, dass nur ein Benutzer, der sich als berechtigt authentifiziert, die Fördervorrichtung 100 benutzen oder starten kann. Zum Beispiel erfolgt eine Unterstützung der Bewegung der Fördervorrichtung 100 durch den oder die Motoren 2 nur bei einer erfolgreichen Authentifizierung.

Wie insbesondere in den Figuren 2, 3 und 4 zu erkennen ist, umfasst die Fördervorrichtung 100 Einschubführungselemente 8 in Form von Rollen 8. Die Rollen 8 sind seitlich links und rechts an dem Einschubabschnitt 1 der Fördervorrichtung 100 angeordnet. Insbesondere weist der Einschubabschnitt 1 an der linken und rechten Seite jeweils ein Seitenelement 80 in Form eines Lagers 80 auf, in denen die Rollen 8 drehbar gelagert sind. Die Drehachsen der Rollen 8 verlaufen dabei senkrecht zum Boden 300.

Wie insbesondere in den Figuren 4 und 6 zu sehen ist, nimmt eine Breite des Einschubabschnitts 1 in Vorwärtsrichtung V ab. Dies ist insbesondere durch die Form der Lager 80 realisiert. In den Lagern 80 sind die Rollen 8 dabei so gelagert, dass der Abstand zwischen zwei in einer Querrichtung, senkrecht zur Vorwärtsrichtung V, gegenüberliegenden Rollen 8 kleiner wird, je näher am vorderen Ende der Fördervorrichtung 100 sie angeordnet sind. Dadurch wird ein Einschieben der Fördervorrichtung 100 in oder unter ein Transportstück erleichtert.

Ebenfalls in Figuren 4 und 6 zu erkennen ist, dass im Bereich des hinteren Endes des Einschubabschnitts 1 links und rechts jeweils ein Anschlagelement 10 vorgesehen ist. Die Anschlagelemente 10 stehen nach links und rechts weiter hervor als die Rollen 8. Die Anschlagselemente 10 sind vorliegend ebenfalls als Rollen ausgebildet. Außerdem befindet sich vor den Anschlagselementen 10 jeweils ein erster Sensor 4 in Form eines induktiven Sensors. Die ersten Sensoren 4 sind dazu eingerichtet, bei bestimmungsgemäßer Positionierung der Fördervorrichtung 100 bezüglich eines Transportstücks ein Freigabesignal zu erzeugen, um beispielsweise den Kopplungsmechanismus 3 automatisch zu aktivieren oder eine Aktivierung des Kopplungsmechanismus 3 freizugeben.

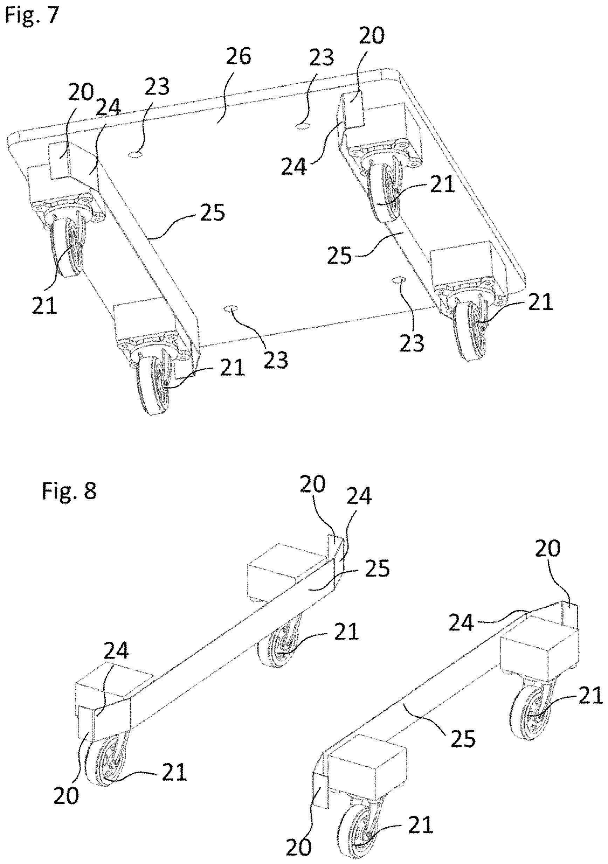

Figur 7 zeigt einen Teil eines ersten Ausführungsbeispiels des Sets. Neben dem dargestellten Teil umfasst das Set noch eine Fördervorrichtung 100, zum Beispiel die der Figuren 1 bis 6. Bei dem dargestellten Teil handelte es sich um ein Anbauteil zum Anbringen an ein Transportstück. Das Anbauteil umfasst ein Platte 26, die zum Beispiel an die Unterseite des Transportstücks angeschraubt werden kann. Die Platte 26 umfasst vier Gegenkopplungselemente 23 mit jeweils einer Aussparung bzw. einem Loch. Außerdem sind an der Platte 26 zwei Führungselemente 25 in Form von Schienen angebracht. Die Funktion der Führungselemente 25 und der Gegenkopplungselemente 23 wird später genauer erläutert. An der Platte 26 sind außerdem Auflageelement 21 in Form von Rädern 21 vorgehsehen.

Mit dem in der Figur 7 gezeigten Teil des Sets, insbesondere durch die Verwendung von jeweils zwei Gegenkopplungselementen 23 an gegenüberliegenden Seiten, kann die Fördervorrichtung 100 von zwei Seiten an das Transportstück an oder unter das Transportstück geschoben und mit diesem gekoppelt werden.

Figur 8 zeigt einen Teil eines zweiten Ausführungsbeispiels des Sets. Wieder ist das Set ohne Fördervorrichtung 100 dargestellt. In diesem Fall umfasst der Teil des Sets zwei separate Führungselemente 25 in Form von Schienen, die an eine Unterseite eines Transportstücks angebracht werden können. Die Führungselemente 25 sind über Blöcke mit Rädern 21 verbunden.

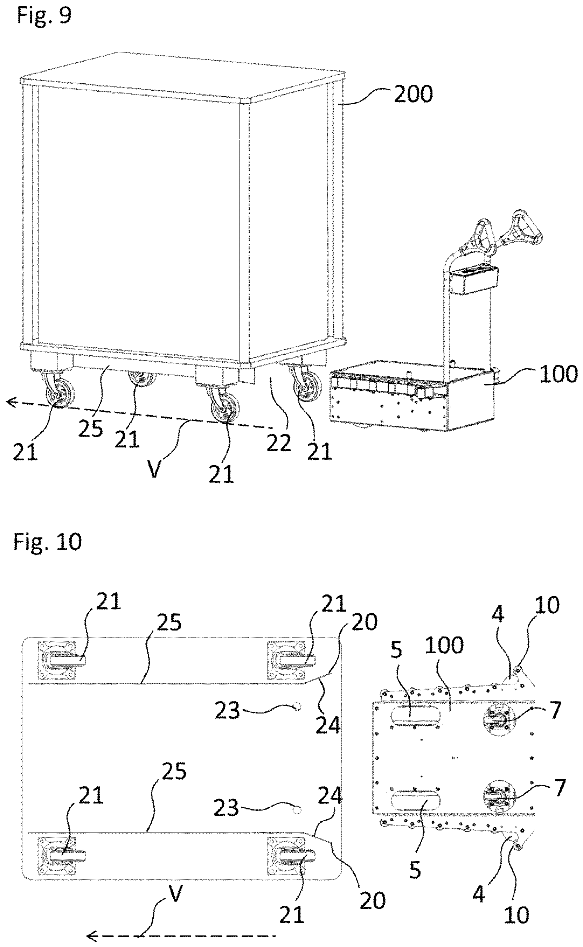

Die in den Figuren 8 und 9 dargestellten Räder 21 können Teil des jeweiligen Sets sein. Alternativ kann das jeweilige Set auch ohne die Räder 21 bereitgestellt werden.

Figuren 9 und 10 zeigen eine Position in einem Ausführungsbeispiel des Verfahrens zum Betreiben der Fördervorrichtung 100. Bei der Fördervorrichtung 100 handelt es sich zum Beispiel um die Fördervorrichtung 100 gemäß dem Ausführungsbeispiel der Figuren 1 bis 6. Figur 9 zeigt eine perspektivische Ansicht, bei der die Fördervorrichtung 100 in Vorwärtsrichtung V auf ein Transportstück 200 in Form eines Containers zugeschoben wird.

Figur 10 zeigt eine Ansicht auf die Unterseiten des Containers 200 und der Fördervorrichtung 100.

Der Container 200 hat beispielsweise ein Gewicht von zumindest 100 kg. Der Container 200 umfasst vier Auflageelemente 21 in Form von Rädern 21. Ein Einschubbereich 22 ist zwischen den Rädern 21 gebildet. Im Einschubbereich 22 ist der Container 200 vom Boden 300 beanstandet. In diesen Einschubbereich 22 kann der Einschubabschnitt 1 der Fördervorrichtung 100 eingeschoben werden.

Wie ebenfalls in den Figuren 9 und 10 zu sehen ist, weist der Container 200 Führungselemente 25 in Form von Führungsschienen 25 auf. Zum Beispiel ist eines der in Figuren 7 oder 8 dargestellten Setteile an den Container 200 angebracht. Die Führungsschienen 25 erstrecken sich von der Unterseite des Containers 200 in Richtung zum Boden. Beide Führungsschienen 25 sind dabei zwischen den Rädern 21 des Containers 200 angeordnet. Insbesondere ist also ein Abstand der Führungsschienen 25 geringer als eine Spurbreite der Räder 21.

Außerdem verlaufen die Führungsschienen 25 größtenteils parallel zueinander. In einem hinteren Bereich des Containers 200 laufen die Führungsschienen 25 auseinander. Die Führungsschienen 25, mit der am hinteren Ende auseinanderlaufenden Form, sowie die sich verjüngende Form des Einschubabschnitts 1 der Fördervorrichtung ermöglichen ein komfortables und geführtes Positionieren der Fördervorrichtung 100 bezüglich des Containers 200.

An der Unterseite des Containers 200 sind außerdem die Gegenkopplungselemente 23 vorgesehen. Die Löcher der Gegenkopplungselemente 23 sind so gestaltet, dass die Kopplungselemente 30 der Fördervorrichtung 100 in diese eingeschoben werden können. Die Gegenkopplungselemente 23 sind insbesondere als Gleithülse oder Buchse ausgeführt.

Figur 10 zeigt auch, dass die Spurbreiten sowohl der angetriebenen Räder 5 als auch der weiteren Räder 7 kleiner sind als die Spurbreiten der Räder 21 des Containers 200. Beim Einschieben des Einschubabschnitts 1 unter den Container 200 wird der Einschubabschnitt 1 zwischen die beiden Führungsschienen 25 eingeschoben.

Die Führungselemente 25 könnten statt wie in Figur 10 gezeigt auch wie in den Figuren 7 und 8 gezeigt an beiden längsseiteigen Enden auseinanderlaufen, um die Fördervorrichtung auch von der anderen Seite unter das Transportstück schieben zu können. Bevorzugt sind dann auch entsprechende Gegenkopplungselemente 23 an der gegenüberliegenden Seite vorgesehen.

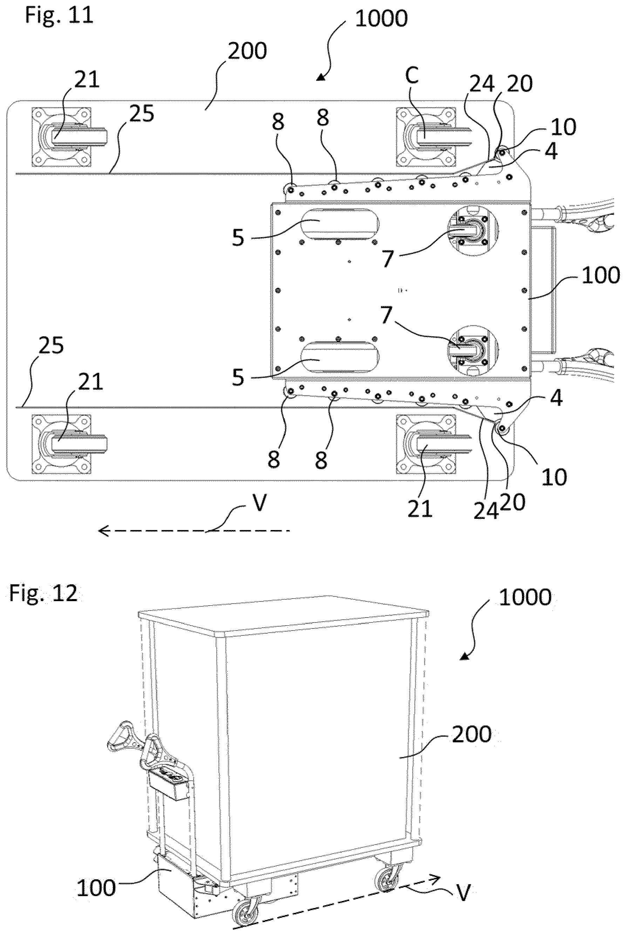

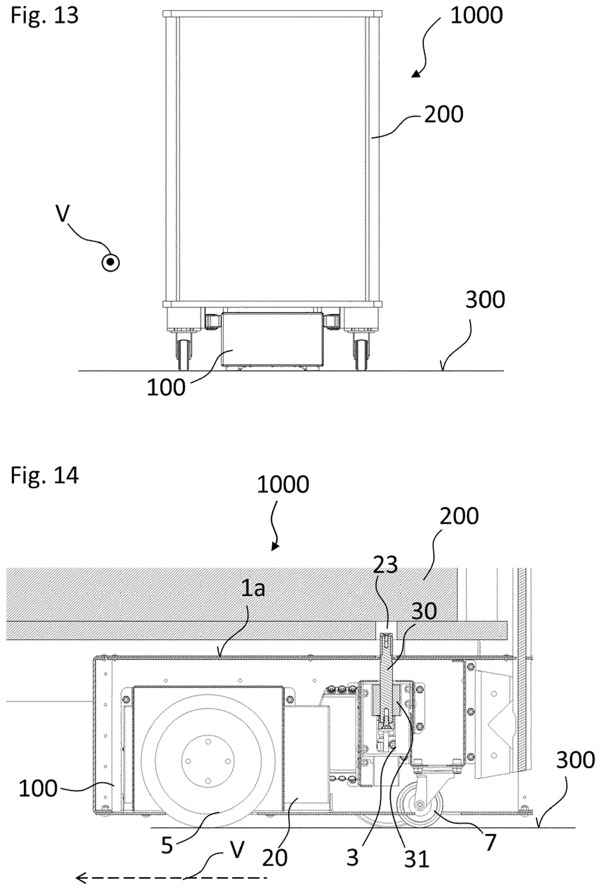

Figuren 11 bis 17 zeigen verschiedene Ansichten einer Position in dem Verfahren, in der die Fördervorrichtung 100 bestimmungsgemäß bezüglich des Containers 200 positioniert ist und die Fördervorrichtung 100 mit dem Container 200 gekoppelt ist. Dabei ist in Figur 11 eine Ansicht auf die Unterseiten des Containers 200 und der Fördervorrichtung 100 gezeigt. Figur 12 zeigt eine perspektivische Ansicht, Figur 13 eine Ansicht auf die Vorderseite. Gleichzeitig zeigen Figuren 11 bis 13 ein Ausführungsbeispiel des Systems 1000 umfassend die Fördervorrichtung 100 und den Container 200. Die Figuren 14, 15 und 17 zeigen ergänzend dazu Schnittansichten durch das System 1000.

In den Figuren 11 bis 15 ist zu erkennen, dass der Einschubabschnitt 1 der Fördervorrichtung 100 unter den Container 200 geschoben ist und zwischen den Rädern 21 und den Führungsschienen 25 angeordnet ist. Die Anschlagelemente 10 der Fördervorrichtung 100 liegen an Gegenanschlagelementen 20 des Containers 200 an. Die Gegenanschlagelemente 20 sind vorliegend durch die hinteren Kanten der Führungsschienen 25 gebildet. Alternativ können die Gegenanschlagelemente 20 auch durch umgebogene, quer oder senkrecht zur Vorwärtsrichtung V verlaufende Abschnitte der Führungsschienen 25 gebildet sein, so wie es in den Figuren 7 und 8 dargestellt ist.

Außerdem ist in Figur 11 zu erkennen, dass die ersten Sensoren 4 an Kontaktbereichen 24 des Containers 200 anliegen bzw. diesen sehr nahe sind. Die Kontaktbereiche 24 sind vorliegend Abschnitte der Führungsschienen 25, in denen die Führungsschienen 25 auseinanderlaufen. Die Kontaktbereiche 24 sind also spitzwinklig zur Vorwärtsrichtung V verlaufende Abschnitte der Führungsschienen 25.

Durch die Nähe der ersten Sensoren 4 zu den Kontaktbereichen 24 wird beispielsweise ein von den ersten Sensoren 4 erzeugtes Magnetfeld verändert. Dazu weisen die Kontaktbereiche 24 insbesondere ein elektrisch leitfähiges Material, zum Beispiel Metall, auf. Die ersten Sensoren 4 geben jeweils ein entsprechendes Freigabesignal aus, das den Kopplungsmechanismus 3 der Fördervorrichtung 100 aktiviert oder zur Aktivierung freigibt. Beispielsweise wird der Kopplungsmechanismus 3 nur aktiviert oder zur Aktivierung freigegeben, wenn beide ersten Sensoren 4 gleichzeitig ein Freigabesignal ausgeben.

In den Figuren 7 und 8 sind bei jedem Führungselement 25 Kontaktbereiche 24 und Gegenanschlagelemente 20 an beiden längsseitigen Enden vorgesehen.

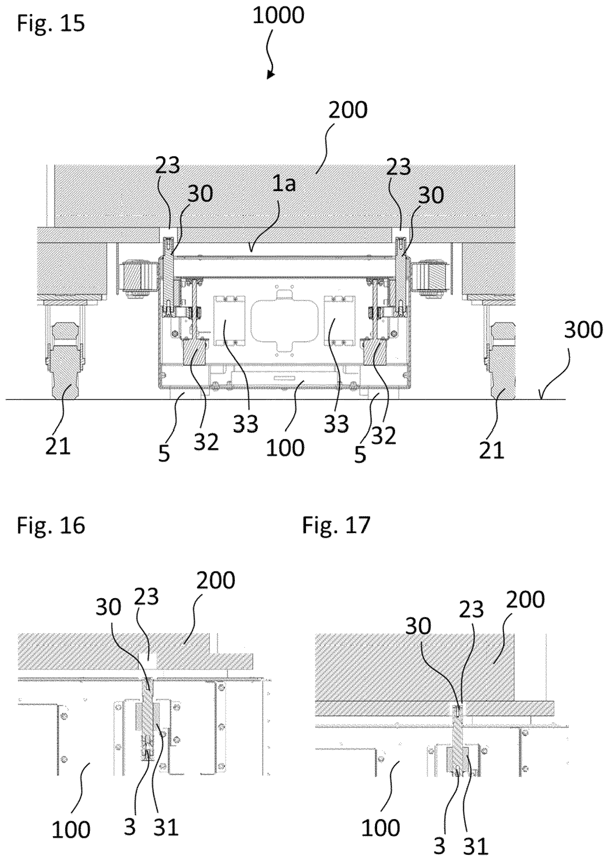

In den in Figuren 14 bis 17 gezeigten Schnittansichten ist zu erkennen, dass durch die Aktivierung des Kopplungsmechanismus 3 die Kopplungselemente 30 in Richtung weg vom Boden aus einer Freigabeposition (siehe Figur 16) in eine Kopplungsposition (siehe Figuren 14, 15 und 17) bewegt werden und dabei in Eingriff mit den Gegenkopplungselementen 23 im Container 200 gebracht werden. Die Bewegung der Kopplungselemente 30 zwischen der Freigabeposition und der Kopplungsposition erfolgt hier jeweils mittels eines Spindelantriebs 31. Kann eines der Kopplungselemente 30 nicht oder nicht vollständig in die Kopplungsposition gebracht werden, zum Beispiel weil eine Bewegung blockiert ist, kann dies die Fördervorrichtung 100 erkennen und den Kopplungsmechanismus 3 automatisch wieder deaktivieren, wobei beispielsweise die Kopplungselemente 30 wieder in die Freigabeposition bewegt werden. Anschließend kann durch erneute (automatische) Aktivierung des Kopplungsmechanismus 3 ein erneuter Kopplungsversuch erfolgen.

In der Schnittansicht der Figur 15 sind außerdem die Elektromotoren 32 für den Spindelantrieb 31 sowie die Steuereinheit 33 für den Elektromotor 32 gezeigt. Statt eines Spindelantriebes könnte das Kopplungselement 30 aber auch mithilfe eines Hubmagneten oder eines Kompressors bewegt werden.

Nach der Kopplung über den Kopplungsmechanismus 3 kann die Fördervorrichtung 100 in Vorwärtsrichtung V und auch in Rückwärtsrichtung bewegt werden und schiebt dabei das Transportstück 200 in dieselbe Richtung.

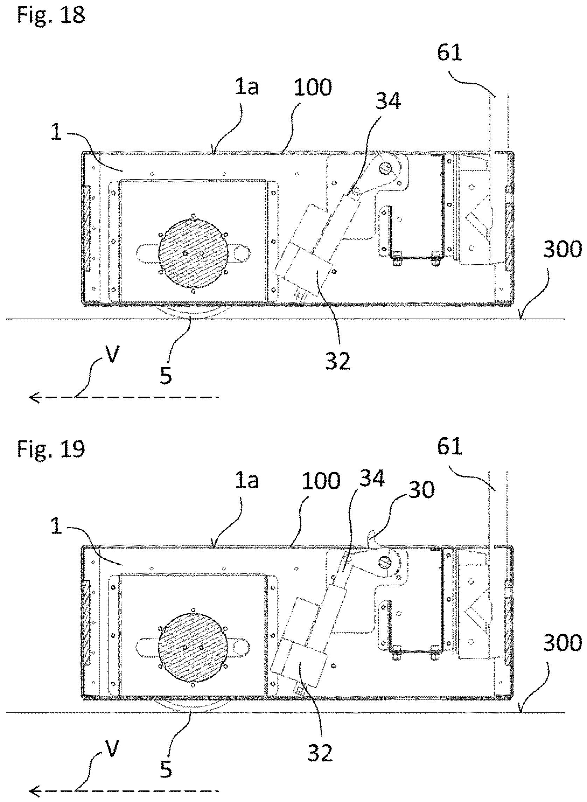

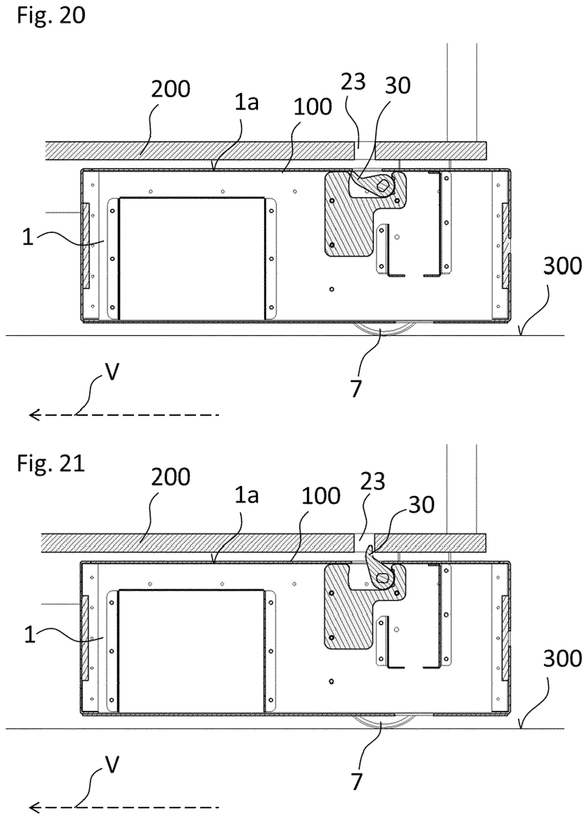

In den Figuren 18 bis 21 ist ein weiteres Ausführungsbeispiel des Kopplungsmechanismus dargestellt. Hier ist das Kopplungselement 30 nicht als Kolben/Bolzen sondern als Haken 30 ausgebildet. Der Haken 30 kann mithilfe eines Aktuators 34 und eines Elektromotors 32 von der Freigabeposition (siehe Figuren 18 und 20) in die Kopplungsposition (siehe Figuren 19 und 21) gebracht werden. Der Kopplungsmechanismus ist dabei so eingerichtet, dass eine lineare Bewegung des Aktuators 34 über ein Getriebe in einer Rotation des Hakens 30 umgewandelt wird. Der Haken 30 rotiert dabei um eine Achse senkrecht zur Vorwärtsrichtung V und parallel zum Boden 300. Bei der Bewegung von der Freigabeposition in die Kopplungsposition wird der Haken 30 in vertikaler Richtung weg vom Boden 300 und gleichzeitig in Rückwärtsrichtung bewegt.

Wie in der Figur 21 zu erkennen ist, greift der Haken 30 bei seiner Rotation in die Kopplungsposition in das Gegenkopplungselement 23 ein und kommt dabei in Kontakt mit einer nach vorne gerichteten Fläche des Transportstück 200. Dies kann dazu führen, dass bei der Bewegung von der Freigabeposition in die Kopplungsposition das Transportstück 200 ein Stück in Rückwärtsrichtung bewegt wird.

Die Verwendung eines Hakens 30, der von der Freigabeposition in die Kopplungsposition bewegt wird, kann gegenüber dem im vorigen Ausführungsbeispiel dargestellten Kolben 30, der über eine rein lineare Bewegung von der Freigabeposition in die Kopplungsposition bewegt wird, vorteilhaft in Bezug auf die einzuhaltenden Toleranzen sein. Bei der Verwendung des Kolbens 30 aus dem vorhergehenden Ausführungsbeispiel kann eine präzisere Ausrichtung des Transportstücks 200 in Bezug auf die Fördervorrichtung 100 notwendig sein, um eine Kopplung zu gewährleisten. Eine ungenaue Positionierung kann dazu führen, dass der Kolben 30 entweder gar nicht in das Loch 23 einführbar ist oder bei der Einführung an einer Kante des Transportstücks 200 entlang rutscht und es dabei zu Verschleißerscheinungen kommt.

Bei dem Ausführungsbeispiel der Figuren 18 bis 21 kann die anfängliche Positionierung ungenauer ausfallen. Zudem sind durch die Rotationsbewegung Verschleißerscheinungen reduziert.

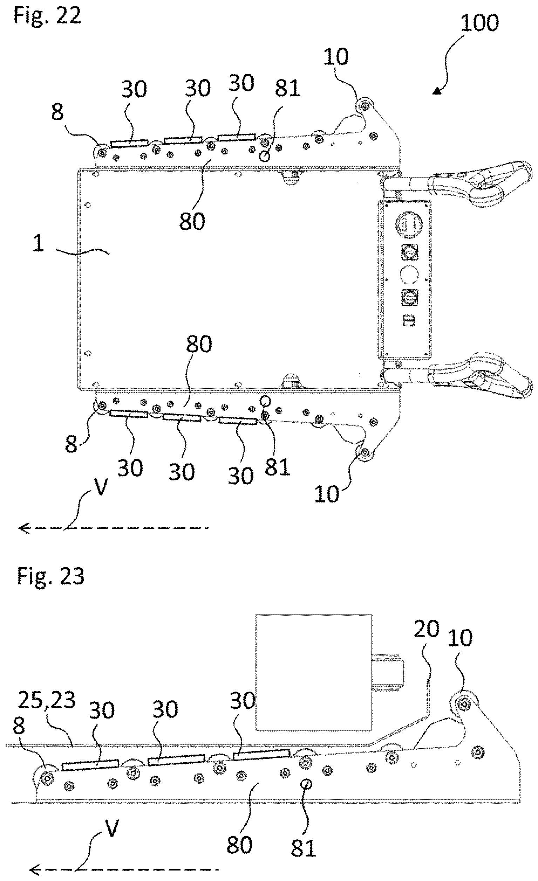

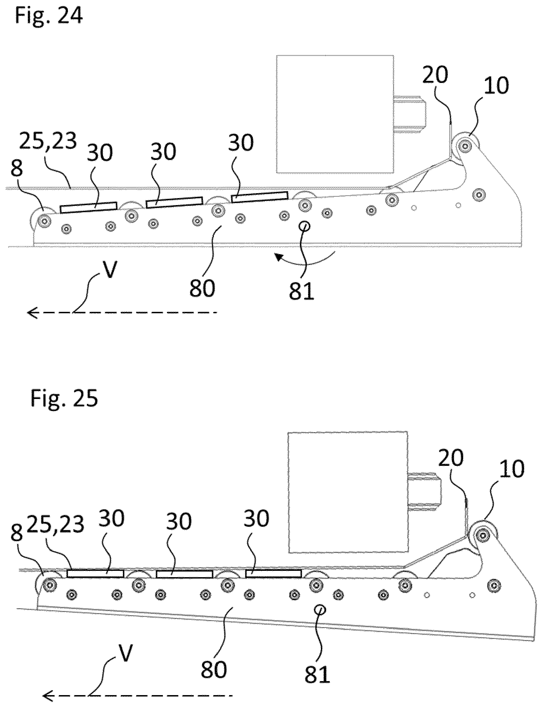

In der Figur 22 ist ein weiteres Ausführungsbeispiel Fördervorrichtung 100 in einer Draufsicht von oben dargestellt. Die Seitenelemente 80 links und rechts an dem Einschubabschnitt 1 sind hier drehbar bezüglich des Hauptkörpers des Einschubabschnitts 1 gelagert. Insbesondere sind die Seitenelemente 80 über Drehlager 81 an dem Hauptkörper des Einschubabschnitts 1 befestigt und um eine Achse senkrecht zur Vorwärtsrichtung V, insbesondere senkrecht zur Papierebene, drehbar (siehe auch Figur 25). Die Seitenelemente 80 umfassen jeweils mehrere

Kopplungselemente 30 in Form von Platten oder Schienen oder Leisten aus Gummi. Die Kopplungselemente 30 sind zwischen den Rollen 8 angeordnet.
In den Figuren 23 bis 25 sind verschiedene Positionen gezeigt, während die Fördervorrichtung der Figur 22 in Vorwärtsrichtung V unter ein Transportstück geschoben wird. Figur 23 zeigt eine Position, in der das Anschlagelement 10 noch nicht an das Gegenanschlagelement 20 angeschlagen ist. Das Seitenelement 80 befindet sich hier noch in einer ersten Position.

In den Figuren 24 und 25 sind Positionen gezeigt, in der das Anschlagelement 10 an das Gegenanschlagelement 20 anschlägt. Der Kontaktpunkt bzw. Anschlagpunkt zwischen dem Anschlagelement 10 und dem Gegenanschlagelement 20 ist in horizontaler Richtung senkrecht zur Vorwärtsrichtung V versetzt zum Drehlager 81 des Seitenelements 80. Die in Vorwärtsrichtung V gerichtete Kraft am Kontaktpunkt resultiert in einer Hebelkraft bzw. einem Drehmoment auf das Seitenelement 80, sodass das Seitenelement 80 aus seiner ersten Position in eine zweite Position gedreht wird. Die zweite Position des Seitenelements 80 ist in Figur 25 gezeigt.

Die Drehung des Seitenelements 80 von seiner ersten Position in die zweite Position hat gleichzeitig zu einer Bewegung der Kopplungselemente 30 aus ihrer jeweiligen Freigabeposition in ihre jeweilige Kopplungsposition geführt. In der Kopplungsposition liegen die Kopplungselemente 30 an den Führungselementen 25 des Transportstücks an. Die Führungselemente 25 bilden hier gleichzeitig Gegenkopplungselemente 23.

Der Kopplungsmechanismus kann eine Arretierungssystem aufweisen, das das Seitenelement 80 bzw. die Kopplungselemente 25 zusätzlich gegen das Gegenkopplungselement 23 drückt und/oder gedrückt hält, um die Haftreibungskraft und/oder Gleitreibungskraft zwischen dem Kopplungselement 30 und dem Gegenkopplungselement 23 zusätzlich zu erhöhen und/oder aufrechtzuerhalten. Das Arretierungssystem kann elektrisch oder pneumatisch betrieben werden. Insbesondere ist die Haftreibungskraft und/oder Gleitreibungskraft zwischen den Kopplungselementen 30 und dem Gegenkopplungselement 23 so groß, dass eine Bewegung der Fördervorrichtung in Rückwärtsrichtung zu einer Bewegung des Transportstück in Rückwärtsrichtung führt. Eine Bewegung der Fördervorrichtung in Vorwärtsrichtung V kann über das Zusammenwirken der Kopplungselemente 30 und dem Gegenkopplungselement 23 zu einer Bewegung des Transportstücks in Vorwärtsrichtung V führen. Insbesondere führt aber der Anschlag des Anschlagelements 10 and das Gegenanschlagelement 20 zu einer Kraftübertragung von der Fördervorrichtung auf das Transportstück bei einer Bewegung der Fördervorrichtung in Vorwärtsrichtung V.

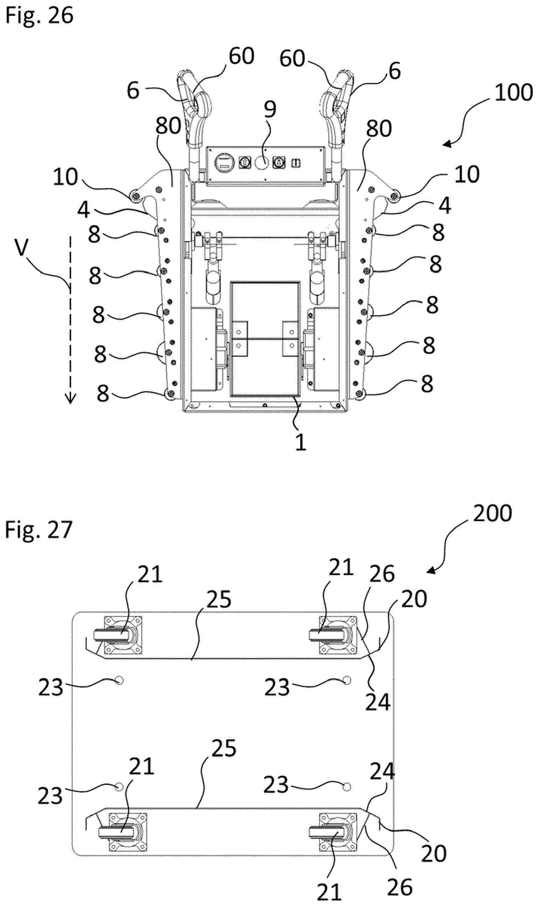

Figur 26 zeigt ein weiteres Ausführungsbeispiel der Fördervorrichtung 100 in einer Draufsicht von oben. Dabei ist eine Deckplatte des Einschubabschnitts 1 entfernt, sodass das Innenleben des Einschubabschnitts 1 sichtbar ist. Anders als in den vorhergehenden Ausführungsbeispielen, sind hier die Rollen 8 in den Seitenelementen 80 nicht alle gleich groß. Einige Rollen 8 weisen größere Durchmesser als andere Rollen 8 auf. Insbesondere sind die Durchmesser einiger Rollen 8 so angepasst, dass eine bessere Zentrierung der Fördervorrichtung 100 beim Einschieben unter das Transportstück erreicht wird.
Figur 27 zeigt ein Ausführungsbeispiel des Transportstücks 200 bei einem Blick auf die Unterseite des Transportstücks 200. Die Führungselemente 25 sind im Wesentlichen wie in den Figuren 7 und 8 ausgeführt. Zusätzlich sind Versteifungselemente 26 vorgesehen, die dazu eingerichtet sind, die Gegenanschlagelemente 20 bei einer in Vorwärtsrichtung V wirkenden Kraft zu stützen. Somit soll ein Verbiegen der Gegenanschlagelemente 20 in Bezug auf den Rest der Führungselemente 25 vermieden werden. Die Versteifungselemente 26 sind länglich ausgebildet. Ein längsseitiges Ende des Versteifungselements 26 liegt an einem Block eines Rades 21 und das andere längsseitige Ende liegt an einem Führungselement 25 nahe des Gegenanschlagelements 25 an.

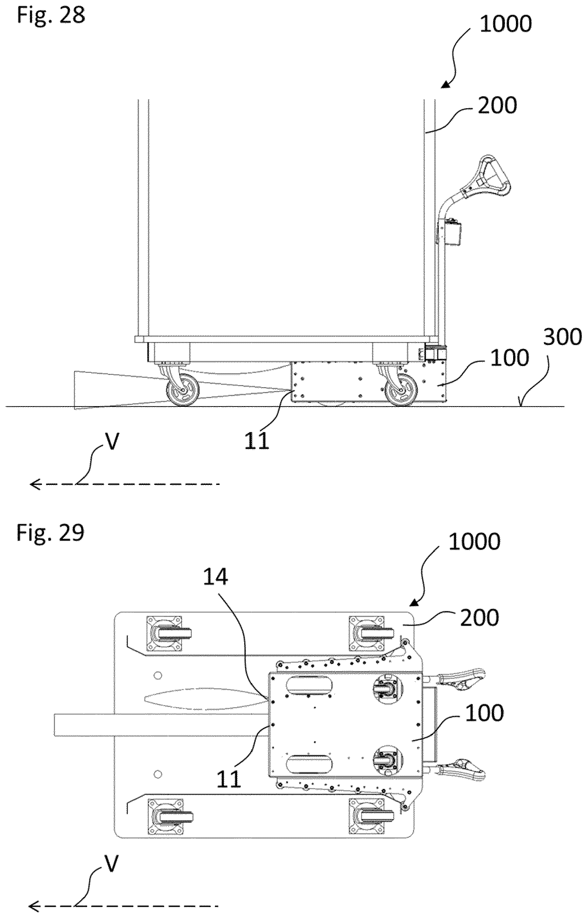

In den Figuren 28 und 29 ist ein weiteres Ausführungsbeispiel der Fördervorrichtung 100 gezeigt, die mit einem Transportstück 200 gekoppelt ist. Figur 28 zeigt eine Seitenansicht, Figur 29 eine Ansicht auf die Unterseite.

Die Fördervorrichtung 100 umfasst ein lichtemittierendes Element 100 an einem vorderen Ende des Einschubabschnitts 1. Das lichtemittierende Element 100 umfasst beispielsweise eine Mehrzahl von LEDs. Das lichtemittierende Element 11 leuchtet im Betrieb einen Bereich des Bodens 300 vor der Fördervorrichtung 100 und insbesondere auch vor dem Transportstück 200 aus. Der von dem lichtemittierenden Element 11 erzeugte Lichtkegel ist in der Figur 29 durch den Balken vor der Fördervorrichtung 100 gekennzeichnet. Nähert sich das System 1000 aus Fördervorrichtung 100 und Transportstück 200 beispielsweise einer Kreuzung, so wird der Boden 300 im Bereich der Kreuzung beleuchtet, bevor das System 1000 die Kreuzung erreicht hat. Ein Dritter, der von links oder rechts auf die Kreuzung zukommt, kann so gewarnt werden.

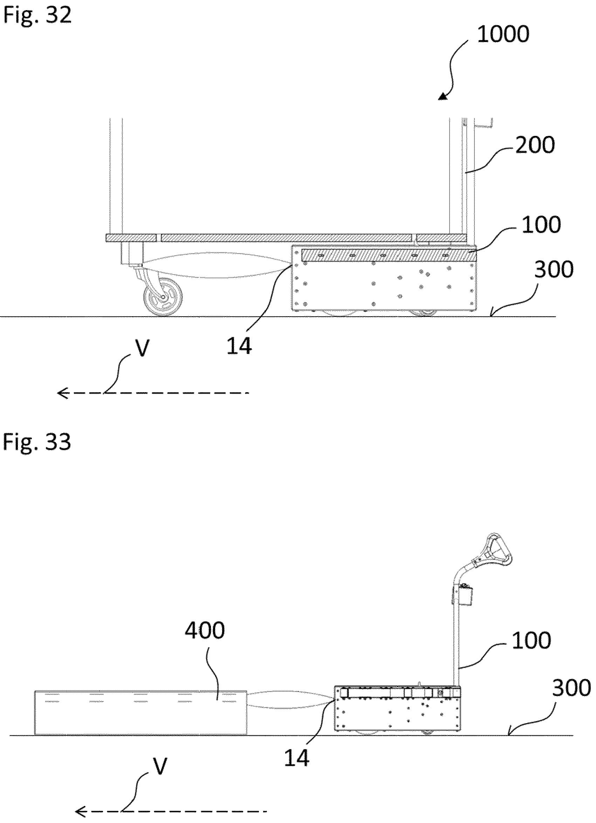

Wie in der Figur 29 zu erkennen ist, weist die Fördervorrichtung 100 zudem einen zweiten Sensor 14 zur Erfassung einer Übernahmeeinheit auf. Beim zweiten Sensor 14 handelt es sich beispielsweise um einen Abstandsensor, zum Beispiel einen Ultraschallsensor. Der zweite Sensor 14 erfasst einen Bereich vor der Fördervorrichtung 100. Ein Detektionsbereich des zweiten Sensors 14 ist durch die Keule vor der Fördervorrichtung 100 gekennzeichnet. Insbesondere deutet die endliche Länge der Keule an, dass, nur wenn sich eine Übernahmeeinheit einen vorgegebenen Abstand zum vorderen Ende der Fördervorrichtung 100 unterschreitet, die Fördervorrichtung eine Aktion ausführt, insbesondere den Kopplungsmechanismus deaktiviert, wie im Zusammenhang mit den Figuren 32 bis 34 beschrieben wird.

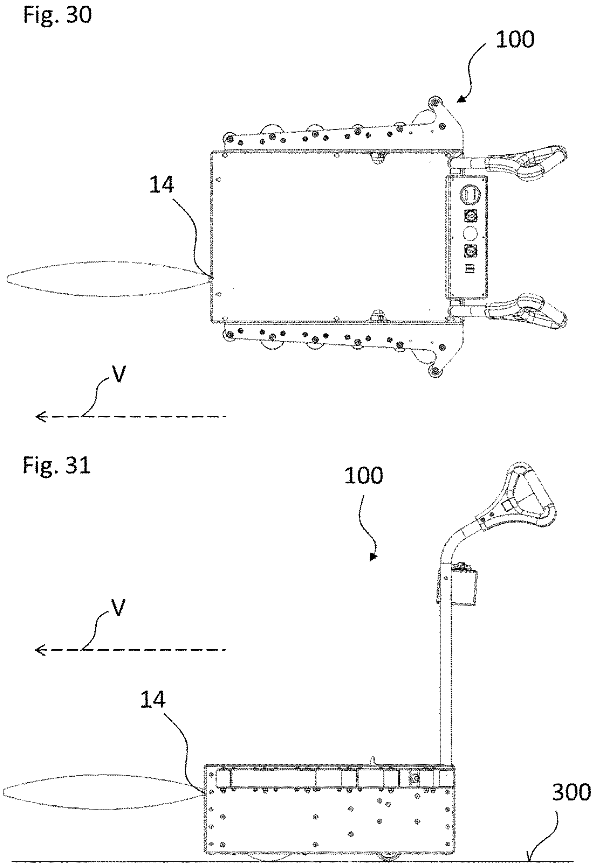

In den Figuren 30 und 31 ist die Fördervorrichtung 100 der Figuren 28 und 29 in Draufsicht von oben und in Seitenansicht gezeigt. Das lichtemittierende Element 11 ist hier beispielsweise ausgeschaltet.

Die Figuren 32 bis 34 zeigen verschiedene Position während des Betriebs der Fördervorrichtung 100. Die Fördervorrichtung 100 wird dabei beispielsweise in Vorwärtsrichtung V auf eine Übernahmeeinheit 400 zubewegt. Bei der Übernahmeeinheit 400 kann es sich um einen Bahnhof für das Transportstück 200 handeln, an die das Transportstück 200 übergeben wird und die das Transportstück 200 weitertransportiert. Beispielsweise ist die Übernahmeeinheit 400 ein Förderband für das Transportstück 200. Erfasst der zweite Sensor 14, dass die Übernahmeeinheit 400 den vorgegebenen Abstand zu Fördervorrichtung 100 unterschreitet, so wird beispielsweise der Kopplungsmechanismus deaktiviert, sodass das Transportstück 200 von der Übernahmeeinheit 400 übernommen und relativ zur Fördervorrichtung 100 in Vorwärtsrichtung V weitertransportiert werden kann.

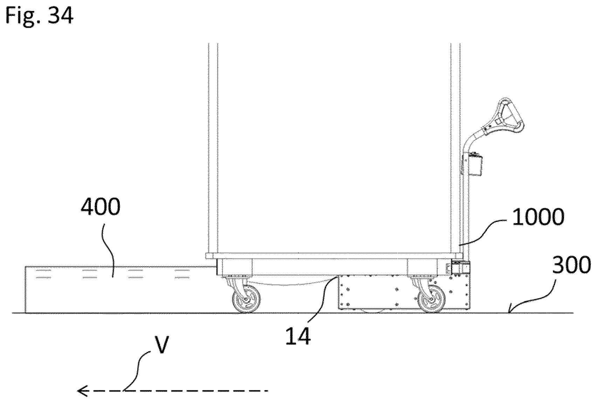

Wie insbesondere den Figuren 32 und 34 zu entnehmen ist, ist der vorgegebene Abstand dabei so gewählt, dass dieser kleiner ist als der Abstand zwischen dem vorderen Ende des Transportstück und dem vorderen Ende der Fördervorrichtung 100. Insbesondere ist der vorgegebene Abstand also so gewählt, dass, nur wenn das Transportstück 200 tatsächlich in Vorwärtsrichtung V überlappend zur Übernahmeeinheit 400 angeordnet ist, der Kopplungsmechanismus deaktiviert wird. Damit kann sichergestellt werden, dass das Transportstück 200 nur von der Fördervorrichtung 100 entkoppelt wird, wenn es sicher an die Übernahmeeinheit 400 übergeben ist.

Die Erfindung ist nicht durch die Beschreibung anhand der Ausführungsbeispiel auf diese beschränkt. Vielmehr umfasst die Erfindung jedes neue Merkmal sowie der Kombination von Merkmalen, was insbesondere jede Kombination von Merkmalen in den Patentansprüchen beinhaltet, auch wenn diese Merkmale oder diese Kombination selbst nicht explizit in den Patentansprüchen oder Ausführungsbeispiel angegeben ist.

### Bezugszeichenliste

- 1: Einschubabschnitt
- 1a: Oberseite des Einschubabschnitts
- 2: Motor
- 20: Batterie
- 3: Kopplungsmechanismus
- 30: Kopplungselement
- 31: Spindelantrieb
- 32: Elektromotor
- 33: Steuereinheit für Elektromotor 32
- 34: Aktuator
- 4: erster Sensor
- 5: antreibbares Auflageelement / Rad
- 6: Benutzerkontaktelement
- 60: Kraftsensor
- 61: Verbindungsstange
- 7: weiteres Auflageelement / Rad
- 8: Einschubführungselement / Rolle
- 80: Seitenelement / Lager
- 81: Drehlager
- 9: Mittelkonsole
- 10: Anschlagelement
- 11: lichtemittierendes Element
- 14: zweiter Sensor
- 100: Fördervorrichtung
- 200: Transportstück
- 20: Gegenanschlagelement
- 21: Auflageelement / Rad
- 22: Einschubbereich
- 23: Gegenkopplungselement
- 24: Kontaktbereich
- 25: Führungselement / Führungsschiene
- 26: Versteifungselement
- 300: Boden
- 400: Übernahmeeinheit
- V: Vorwärtsrichtung

## Patentansprüche

1. Fördervorrichtung (100) zum Schieben eines Transportstücks (200) entlang eines Bodens (300), aufweisend
- zumindest einen Motor (2), um eine Bewegung der Fördervorrichtung (100) entlang des Bodens (300) zumindest zu unterstützen,
- einen Kopplungsmechanismus (3) zum Koppeln der Fördervorrichtung (100) mit dem Transportstück (200), wobei
- die Fördervorrichtung (100) so eingerichtet ist, dass
- ein Benutzer die Fördervorrichtung (100) in eine Vorwärtsrichtung (V) vor sich herbewegen kann,
- der Motor (2) eine Bewegung der Fördervorrichtung (100) in Vorwärtsrichtung (V) zumindest unterstützt,
- der Kopplungsmechanismus (3) die Fördervorrichtung (100) mit dem Transportstück (200) derart koppelt, dass bei einer Bewegung der Fördervorrichtung (100) das Transportstück (200) mitbewegt wird und beim Koppeln ein Kontakt des Transportstücks (200) zum Boden aufrecht erhalten bleibt.

2. Fördervorrichtung (100) nach Anspruch 1, wobei
- die Fördervorrichtung (100) so eingerichtet ist, dass bei Ausübung einer in Vorwärtsrichtung (V) gerichteten Kraft durch den Benutzer auf die Fördervorrichtung (100) diese in Vorwärtsrichtung (V) geschoben werden kann.

3. Fördervorrichtung nach Anspruch 1 oder 2, weiter aufweisend
- einen Einschubabschnitt (1), der dazu eingerichtet ist, in Vorwärtsrichtung (V) in oder unter das Transportstück (200) gebracht zu werden, wobei
- der Kopplungsmechanismus (3) im Einschubabschnitt (1) vorgesehen ist,
- die Fördervorrichtung (100) so eingerichtet ist, dass eine Kopplung der Fördervorrichtung (100) mit dem Transportstück (200) durch den Kopplungsmechanismus (3) ermöglicht ist, wenn der Einschubabschnitt (1) in oder unter das Transportstück (200) geschoben ist.

4. Fördervorrichtung (100) nach einem der vorhergehenden Ansprüche, wobei
- der Kopplungsmechanismus (3) ein Kopplungselement (30) aufweist,
- das Kopplungselement (30) zwischen einer Freigabeposition und einer Kopplungsposition bewegbar ist,
- das Kopplungselement (30) in der Kopplungsposition für ein Zusammenwirken mit einem Gegenkopplungselement (23) des Transportstücks (200) eingerichtet ist, um eine Kraftübertragung von der Fördervorrichtung (100) auf das Transportstück (200) beim Bewegen der Fördervorrichtung (100) zu bewirken,
- der Kopplungsmechanismus (3) eingerichtet ist, die Fördervorrichtung (100) und das Transportstück (200) drehfest und axialfest miteinander zu koppeln.

5. Fördervorrichtung (100) nach einem der vorhergehenden Ansprüche, weiter aufweisend
- einen ersten Sensor (4) zur Erfassung, ob die Fördervorrichtung (100) bestimmungsgemäß zum Transportstück (200) positioniert ist, wobei
- die Fördervorrichtung (100) so eingerichtet ist, dass eine Kopplung der Fördervorrichtung (100) mit dem Transportstück (300) durch den Kopplungsmechanismus (3) erst ermöglicht wird, wenn der erste Sensor (4) die bestimmungsgemäße Positionierung der Fördervorrichtung (100) zum Transportstück (200) erfasst.

6. Fördervorrichtung (100) nach einem der vorhergehenden Ansprüche, weiter aufweisend
- zumindest ein antreibbares Auflageelement (5) zum Kontakt mit dem Boden (300), wobei
- das antreibbare Auflageelement (5) mit dem Motor (2) gekoppelt ist und durch den Motor (2) antreibbar ist, um die Fördervorrichtung (100) entlang des Bodens (300) zu bewegen,
- das antreibbare Auflageelement (5) ein Rad oder eine Kette ist.

7. Fördervorrichtung (100) nach Anspruch 6, wobei
- die Fördervorrichtung (100) ein linkes und ein rechtes antreibbares Auflageelement (5) aufweist,
- das linke und das rechte antreibbare Auflageelement (5) durch den zumindest einen Motor (2) differenziell antreibbar sind.

8. Fördervorrichtung (100) nach Anspruch 6 oder 7, weiter aufweisend
- ein Benutzerkontaktelement (6) zum Berühren oder Greifen der Fördervorrichtung (100) durch den Benutzer und/oder zum Anschieben und/oder Ziehen der Fördervorrichtung (100) durch den Benutzer, wobei
- das Benutzerkontaktelement (6) zumindest einen Kraftsensoren (60) zum Erfassen einer auf ihn durch den Benutzer ausgeübten Kraft aufweist,
- die Fördervorrichtung (100) so eingerichtet ist, dass ein Antrieb zumindest eines antreibbaren Auflageelements (5) durch den Motor (2) in Abhängigkeit von der mit dem Kraftsensor (60) erfassten Kraft erfolgt.

9. Fördervorrichtung (100) nach Anspruch 8, wobei
- die Fördervorrichtung (100) zwei Benutzerkontaktelemente (6) zum Berühren oder Greifen mit je einer Hand aufweist,
- die Benutzerkontaktelemente (6) jeweils zumindest einen Kraftsensor (60) zum Erfassen einer auf ihn durch den Benutzer ausgeübten Kraft aufweisen,
- die Fördervorrichtung (100) so eingerichtet ist, dass ein differentieller Antrieb des linken und rechten antreibbaren Auflageelements (5) durch den zumindest einen Motor (2) in Abhängigkeit von den mit den Kraftsensoren (60) in den beiden Benutzerkontaktelementen (6) erfassten Kräften erfolgt.

10. Fördervorrichtung (100) nach einem der vorherigen Ansprüche im jeweiligen Rückbezug auf Anspruch 3, wobei
- links und rechts an dem Einschubabschnitt (1) jeweils mehrere Einschubführungselemente (8) angeordnet sind,
- die Einschubführungselemente (8) Räder oder Walzen sind, die jeweils um eine Achse quer oder senkrecht zur Vorwärtsrichtung (V) drehbar sind,
- die Einschubführungselemente (8) auf der linken und rechten Seite jeweils entlang der Vorwärtsrichtung (V) hintereinander angeordnet sind,
- der Abstand von einem Einschubführungselement (8) an der linken Seite zu dem nächsten Einschubführungselement (8) an der rechten Seite umso kleiner ist umso weiter vorne die Einschubführungselemente (8) in der Fördervorrichtung (100) angeordnet sind.

11. Set aufweisend,
- eine Fördervorrichtung (100) nach einem der vorhergehenden Ansprüche,
- ein Gegenkopplungselement (23) zum Anbringen an ein Transportstück (200), das so eingerichtet ist, dass ein Kopplungselement (30) des Kopplungsmechanismus (3) in Eingriff mit dem Gegenkopplungselement (23) gebracht werden kann, um die Fördervorrichtung (100) mit dem Transportstück (200) zu koppeln und/oder
- zumindest ein Führungselement (25) zum Anbringen an das Transportstück (200), das dazu eingerichtet ist, mit Einschubführungselementen (8) der Fördervorrichtung (100) zusammenzuwirken, um beim Einbringen des Einschubabschnitts (1) die Fördervorrichtung (100) zu führen.

12. Transportstück (200) zur Kopplung mit einer Fördervorrichtung (100) nach einem der Ansprüche 1 bis 10, aufweisend
- zumindest ein Auflageelement (21) zum Kontakt mit dem Boden (300),
- ein Gegenkopplungselement (23), das dazu eingerichtet ist, in Eingriff mit einem Kopplungselement (30) der Fördervorrichtung (100) gebracht zu werden.

13. Transportstück (200) nach Anspruch 12, wobei
- das Transportstück (200) ein Container zur Aufbewahrung von Gegenständen oder ein Bett ist und/oder
- das Transportstück (200) zwischen einschließlich 50 kg und 1000 kg wiegt.

14. System umfassend
- eine Fördervorrichtung (100) nach einem der Ansprüche 1 bis 10,
- ein Transportstück (200) nach Anspruch 12 oder 13, wobei
- der Kopplungsmechanismus (3) die Fördervorrichtung (100) mit dem Transportstück (200) koppelt.

15. Verfahren zum Betreiben einer Fördervorrichtung (100) nach einem der Ansprüche 1 bis 10, aufweisend die Schritte:
- Bewegen der Fördervorrichtung (100) in Vorwärtsrichtung (V), um die Fördervorrichtung (100) bezüglich eines Transportstücks (200) zu positionieren,
- Koppeln der Fördervorrichtung (100) mit dem Transportstück (200) mittels des Kopplungsmechanismus (3), wobei ein Kontakt des Transportstücks (200) zum Boden aufrecht erhalten bleibt,
- Bewegen der Fördervorrichtung (100) in Vorwärtsrichtung (V), wobei das Transportstück (200) in Vorwärtsrichtung (V) mitbewegt wird.
